# EUROPEAN PATENT APPLICATION

(11) **EP 4 726 563 A1**
(43) Date of publication of application: **15.04.2026**
(21) Application number: 25195437.6
(22) Date of filing: 12.08.2025
(51) Int. Cl.: G06F 15/78, G06F 13/16

(54) **SOFTWARE-CONFIGURABLE PROCESSOR DEVICE**

(30) Priority: 08.10.2024 US 202418909561
(71) Applicant: INTEL Corporation, Santa Clara, CA 95054 (US)
(72) Inventor: BIEDERMAN, Daniel Christian, Saratoga, CA (US); COHEN, David Edward, Hull, MA (US)
(74) Representative: Rummler, Felix

(57) **Abstract**

A software-configurable processor device includes a plurality of processor cores with respective storage elements configurable to implement one or more first-in-first-out (FIFO) queues or level one (L1) cache blocks for respective processor cores in the plurality. Configuration hardware is provided to configure a first storage element associated with a first processor core in the set of processor cores to implement a set of FIFO queues in the first storage element for the first processor core based on a configuration definition for the processor device.

## Description

### BACKGROUND

A datacenter may include one or more platforms each comprising at least one processor and associated memory modules. Each platform of the datacenter may facilitate the performance of any suitable number of processes associated with various applications running on the platform. These processes may be performed by the processors and other associated logic of the platforms. Each platform may additionally include I/O controllers, such as network adapter devices, which may be used to send and receive data on a network for use by the various applications.

### BRIEF DESCRIPTION OF THE DRAWINGS

FIG. 1 illustrates a block diagram of components of a datacenter in accordance with certain embodiments.
FIG. 2 is a simplified block diagram of an example processor core with just-in-time (JIT) first-in-first-out (FIFO) queues.
FIGS. 3A-3B are simplified block diagrams illustrating FIFO queues and processing elements of example processor cores.
FIG. 3C is a simplified block diagram illustrating a set of interconnected processor cores.
FIG. 4A is a simplified block diagram illustrating an example processor device.
FIGS. 4B-4C are simplified block diagrams illustrating example routing hardware for use with an example software-configurable processor device.
FIGS. 5A-5B are simplified block diagrams illustrating example reconfigurations of an example processor device based on example software-provided configuration definitions.
FIG. 6 is a simplified flow diagram illustrating an example technique for directing software threads to configurable cores of a processor device.
FIGS. 7A-7B is a simplified block diagram illustrating example configurations of a configurable processor core.
FIG. 8 is a simplified flow diagram illustrating an example technique for configuring processor cores based on a configuration definition.
FIG. 9 is a simplified block diagram illustrating processing pipelines of an example processor device.
FIG. 10 is a simplified block diagram illustrating interconnected processor cores in an example processor device.
FIG. 11 is a simplified block diagram illustrating an example configuration of a processor core in an example processor device.
FIG. 12 is a simplified block diagram illustrating interaction between two processor cores in an example processor device based on a configuration.
FIG. 13 is a simplified block diagram illustrating interaction between two processor cores in an example processor device based on another configuration.
FIGS. 14A-14B are simplified block diagrams illustrating examples of recursion in example processor cores of a processor device.
FIG. 15 is a block diagram illustrating an example model of a portion of a quantum computing architecture.
FIG. 16A is a block diagram illustrating an example processor pipeline.
FIG. 16B is a block diagram illustrating an example processor core.
FIG. 17A is a block diagram illustrating both an exemplary in-order pipeline and an exemplary register renaming, out-of-order issue/execution pipeline according to one example embodiment.
FIG. 17B is a block diagram illustrating both an exemplary embodiment of an in-order architecture core and an exemplary register renaming, out-of-order issue/execution architecture core to be included in a processor according to one example embodiment.
FIG. 18 is a block diagram of a more specific exemplary in-order core architecture, which core would be one of several logic blocks (including other cores of the same type and/or different types) in a chip.
FIG. 19 is a block diagram of a processor that may have more than one core, may have an integrated memory controller, and may have integrated graphics according to one example embodiment.
FIGS. 20-22 are block diagrams of exemplary computer architectures.
FIG. 23 is a block diagram contrasting the use of a software instruction converter to convert binary instructions in a source instruction set to binary instructions in a target instruction set according to some example embodiments.

Like reference numbers and designations in the various drawings indicate like elements.

### DETAILED DESCRIPTION OF EXAMPLE EMBODIMENTS

Modern data centers are used to provide critical computing infrastructure to a vast and growing array of online services and applications relied upon in modern society. Data centers may implement "warehouse computing" environment where facilities house thousands of servers and networking equipment organized to ensure high performance, scalability, and reliability. Equipped with advanced cooling systems, redundant power supplies, and cutting-edge security measures, modern data centers are designed to provide scalable and uninterrupted access to various data and services. In addition to their robust physical infrastructure, modern data centers leverage sophisticated software solutions to optimize operations and enhance efficiency. Virtualization, automation, and artificial intelligence may be used to manage workloads, predict failures, and reduce energy consumption. With the rise of edge computing, data centers are also becoming more distributed, bringing processing power closer to end-users to minimize latency and improve performance, among other example features.

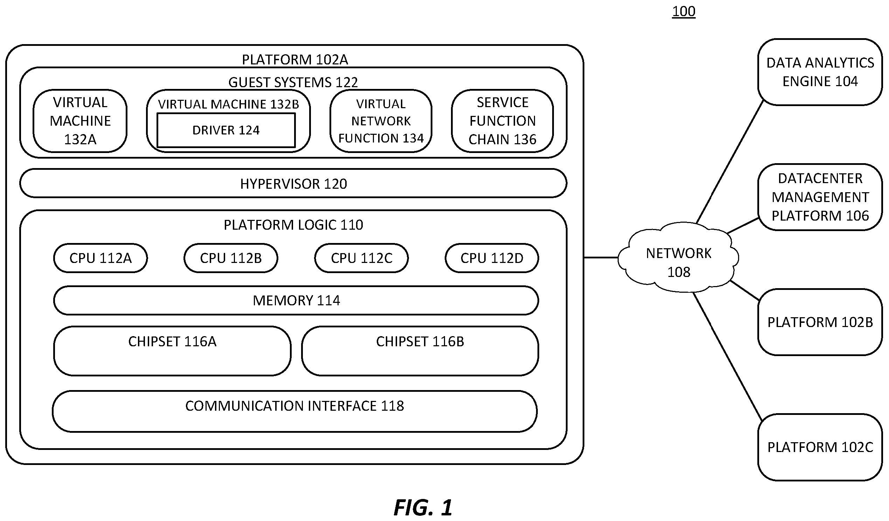

FIG. 1 illustrates a block diagram of components of an example datacenter 100 system in accordance with certain embodiments. In the embodiment depicted, datacenter 100 includes a plurality of platforms 102, data analytics engine 104, and datacenter management platform 106 coupled together through network 108. A platform 102 may include platform logic 110 with one or more processor devices 112, such as central processing units (CPUs) or the configurable processor devices discussed herein, memories 114 (which may include any number of different modules), chipsets 116, communication interfaces 118, and any other suitable hardware and/or software to execute a hypervisor 120 or other operating system capable of executing processes associated with applications running on platform 102. In some embodiments, a platform 102 may function as a host platform for one or more guest systems 122 that invoke these applications. The platform may be logically or physically subdivided into clusters and these clusters may be enhanced through specialized networking accelerators and the use of Compute Express Link (CXL) memory semantics to make such cluster more efficient, among other example enhancements.

A platform 102 may include platform logic 110. Platform logic 110 comprises, among other logic enabling the functionality of platform 102, one or more processor devices 112, memory 114, one or more chipsets 116, and communication interface 118. Although three platforms are illustrated, datacenter 100 may include any suitable number of platforms. In various embodiments, a platform 102 may reside on a circuit board that is installed in a chassis, rack, compossible servers, disaggregated servers, or other suitable structures that comprises multiple platforms coupled together through network 108 (which may comprise, e.g., a rack or backplane switch).

Processor devices 112 may comprise any suitable number of processor cores. The cores may be coupled to each other, to memory 114, to at least one chipset 116, and/or to communication interface 118, through one or more controllers residing on processor device 112 and/or chipset 116. In particular embodiments, a processor device 112 is embodied within a socket that is permanently or removably coupled to platform 102. Although four processor devices are shown, a platform 102 may include any suitable number of processor devices. In some implementations, application to be executed using the processor device may include physical layer management applications, which may enable customized software-based configuration of the physical layer of one or more interconnect used to couple the processor device (or related processor devices) to one or more other devices in a data center system.

Memory 114 may comprise any form of volatile or non-volatile memory including, without limitation, magnetic media (e.g., one or more tape drives), optical media, random access memory (RAM), read-only memory (ROM), flash memory, removable media, or any other suitable local or remote memory component or components. Memory 114 may be used for short, medium, and/or long-term storage by platform 102. Memory 114 may store any suitable data or information utilized by platform logic 110, including software embedded in a computer readable medium, and/or encoded logic incorporated in hardware or otherwise stored (e.g., firmware). Memory 114 may store data that is used by cores of processor devices 112. In some embodiments, memory 114 may also comprise storage for instructions that may be executed by the cores of processor devices 112 or other processing elements (e.g., logic resident on chipsets 116) to provide functionality associated with components of platform logic 110. Additionally or alternatively, chipsets 116 may comprise memory that may have any of the characteristics described herein with respect to memory 114. Memory 114 may also store the results and/or intermediate results of the various calculations and determinations performed by processor devices 112 or processing elements on chipsets 116. In various embodiments, memory 114 may comprise one or more modules of system memory coupled to the processor devices through memory controllers (which may be external to or integrated with processor devices 112). In various embodiments, one or more particular modules of memory 114 may be dedicated to a particular processor device 112 or other processor device or may be shared across multiple processor devices 112 or other processor devices.

A platform 102 may also include one or more chipsets 116 comprising any suitable logic to support the operation of the processor devices 112. In various embodiments, chipset 116 may reside on the same package as a processor device 112 or on one or more different packages. A chipset may support any suitable number of processor devices 112. A chipset 116 may also include one or more controllers to couple other components of platform logic 110 (e.g., communication interface 118 or memory 114) to one or more processor devices. Additionally or alternatively, the processor devices 112 may include integrated controllers. For example, communication interface 118 could be coupled directly to processor devices 112 via integrated I/O controllers resident on the respective processor devices.

Chipsets 116 may include one or more communication interfaces 118. Communication interface 118 may be used for the communication of signaling and/or data between chipset 116 and one or more I/O devices, one or more networks 108, and/or one or more devices coupled to network 108 (e.g., datacenter management platform 106 or data analytics engine 104). For example, communication interface 118 may be used to send and receive network traffic such as data packets. In a particular embodiment, communication interface 118 may be implemented through one or more I/O controllers, such as one or more physical network interface controllers (NICs), also known as network interface cards or network adapters. An I/O controller may include electronic circuitry to communicate using any suitable physical layer and data link layer standard such as Ethernet (e.g., as defined by an IEEE 802.3 standard), Fibre Channel, InfiniBand, Wi-Fi, or other suitable standard. An I/O controller may include one or more physical ports that may couple to a cable (e.g., an Ethernet cable). An I/O controller may enable communication between any suitable element of chipset 116 (e.g., a switch) and another device coupled to network 108. In some embodiments, network 108 may comprise a switch with bridging and/or routing functions that is external to the platform 102 and operable to couple various I/O controllers (e.g., NICs) distributed throughout the datacenter 100 (e.g., on different platforms) to each other. In various embodiments an I/O controller may be integrated with the chipset (e.g., may be on the same integrated circuit or circuit board as the rest of the chipset logic) or may be on a different integrated circuit or circuit board that is electromechanically coupled to the chipset. In some embodiments, communication interface 118 may also allow I/O devices integrated with or external to the platform (e.g., disk drives, other NICs, etc.) to communicate with the processor device cores.

A switch may be used in some implementations to couple to various ports (e.g., provided by NICs) of communication interface 118 and may switch data between these ports and various components of chipset 116 according to one or more link or interconnect protocols, such as Peripheral Component Interconnect Express (PCIe), Compute Express Link (CXL), HyperTransport, GenZ, OpenCAPI, and others, which may each alternatively or collectively apply the general principles and/or specific features discussed herein. Switches and switching logic may be a physical or virtual (e.g., software) switch.

Platform logic 110 may include an additional communication interface 118. Similar to communication interface 118, communication interface 118 may be used for the communication of signaling and/or data between platform logic 110 and one or more networks 108 and one or more devices coupled to the network 108. For example, communication interface 118 may be used to send and receive network traffic such as data packets. In a particular embodiment, communication interface 118 comprises one or more physical I/O controllers (e.g., NICs). These NICs may enable communication between any suitable element of platform logic 110 (e.g., processor devices 112) and another device coupled to network 108 (e.g., elements of other platforms or remote nodes coupled to network 108 through one or more networks). In particular embodiments, communication interface 118 may allow devices external to the platform (e.g., disk drives, other NICs, etc.) to communicate with the processor cores. In various embodiments, NICs of communication interface 118 may be coupled to the processor devices through I/O controllers (which may be external to or integrated with processor devices 112). Further, as discussed herein, I/O controllers may include a power manager 125 to implement power consumption management functionality at the I/O controller (e.g., by automatically implementing power savings at one or more interfaces of the communication interface 118 (e.g., a PCIe interface coupling a NIC to another element of the system), among other example features.

Platform logic 110 may receive and perform any suitable types of processing requests. A processing request may include any request to utilize one or more resources of platform logic 110, such as one or more cores or associated logic. For example, a processing request may comprise a processor core interrupt; a request to instantiate a software component, such as an I/O device driver 124 or virtual machine 132; a request to process a network packet received from a virtual machine 132 or device external to platform 102 (such as a network node coupled to network 108); a request to execute a workload (e.g., process or thread) associated with a virtual machine 132, application running on platform 102, hypervisor 120 or other operating system running on platform 102; or other suitable request.

In various embodiments, processing requests may be associated with guest systems 122. A guest system may comprise a single virtual machine (e.g., virtual machine 132a or 132b) or multiple virtual machines operating together (e.g., a virtual network function (VNF) 134 or a service function chain (SFC) 136). As depicted, various embodiments may include a variety of types of guest systems 122 present on the same platform 102.

A virtual machine 132 may emulate a computer system with its own dedicated hardware. A virtual machine 132 may run a guest operating system on top of the hypervisor 120. The components of platform logic 110 (e.g., processor devices 112, memory 114, chipset 116, and communication interface 118) may be virtualized such that it appears to the guest operating system that the virtual machine 132 has its own dedicated components.

A virtual machine 132 may include a virtualized NIC (vNIC), which is used by the virtual machine as its network interface. A vNIC may be assigned a media access control (MAC) address, thus allowing multiple virtual machines 132 to be individually addressable in a network.

In some embodiments, a virtual machine 132b may be paravirtualized. For example, the virtual machine 132b may include augmented drivers (e.g., drivers that provide higher performance or have higher bandwidth interfaces to underlying resources or capabilities provided by the hypervisor 120). For example, an augmented driver may have a faster interface to underlying virtual switch 138 for higher network performance as compared to default drivers.

VNF 134 may comprise a software implementation of a functional building block with defined interfaces and behavior that can be deployed in a virtualized infrastructure. In particular embodiments, a VNF 134 may include one or more virtual machines 132 that collectively provide specific functionalities (e.g., wide area network (WAN) optimization, virtual private network (VPN) termination, firewall operations, load-balancing operations, security functions, etc.). A VNF 134 running on platform logic 110 may provide the same functionality as traditional network components implemented through dedicated hardware. For example, a VNF 134 may include components to perform any suitable NFV workloads, such as virtualized Evolved Packet Core (vEPC) components, Mobility Management Entities, 3rd Generation Partnership Project (3GPP) control and data plane components, etc.

SFC 136 is a group of VNFs 134 organized as a chain to perform a series of operations, such as network packet processing operations. Service function chaining may provide the ability to define an ordered list of network services (e.g., firewalls, load balancers) that are stitched together in the network to create a service chain.

A hypervisor 120 (also known as a virtual machine monitor) may comprise logic to create and run guest systems 122. The hypervisor 120 may present guest operating systems run by virtual machines with a virtual operating platform (e.g., it appears to the virtual machines that they are running on separate physical nodes when they are actually consolidated onto a single hardware platform) and manage the execution of the guest operating systems by platform logic 110. Services of hypervisor 120 may be provided by virtualizing in software or through hardware assisted resources that require minimal software intervention, or both. Multiple instances of a variety of guest operating systems may be managed by the hypervisor 120. A platform 102 may have a separate instantiation of a hypervisor 120.

Hypervisor 120 may be a native or bare-metal hypervisor that runs directly on platform logic 110 to control the platform logic and manage the guest operating systems. Alternatively, hypervisor 120 may be a hosted hypervisor that runs on a host operating system and abstracts the guest operating systems from the host operating system. Various embodiments may include one or more non-virtualized platforms 102, in which case any suitable characteristics or functions of hypervisor 120 described herein may apply to an operating system of the non-virtualized platform. Further implementations may be supported, such as set forth above, for enhanced I/O virtualization. A host operating system may identify conditions and configurations of a system and determine that features (e.g., SIOV-based virtualization of SR-IOV-based devices) may be enabled or disabled and may utilize corresponding application programming interfaces (APIs) to send and receive information pertaining to such enabling or disabling, among other example features.

Hypervisor 120 may include a virtual switch 138 that may provide virtual switching and/or routing functions to virtual machines of guest systems 122. The virtual switch 138 may comprise a logical switching fabric that couples the vNICs of the virtual machines 132 to each other, thus creating a virtual network through which virtual machines may communicate with each other. Virtual switch 138 may also be coupled to one or more networks (e.g., network 108) via physical NICs of communication interface 118 so as to allow communication between virtual machines 132 and one or more network nodes external to platform 102 (e.g., a virtual machine running on a different platform 102 or a node that is coupled to platform 102 through the Internet or other network). Virtual switch 138 may comprise a software element that is executed using components of platform logic 110. In various embodiments, hypervisor 120 may be in communication with any suitable entity (e.g., a SDN controller) which may cause hypervisor 120 to reconfigure the parameters of virtual switch 138 in response to changing conditions in platform 102 (e.g., the addition or deletion of virtual machines 132 or identification of optimizations that may be made to enhance performance of the platform).

Hypervisor 120 may include any suitable number of I/O device drivers 124. I/O device driver 124 represents one or more software components that allow the hypervisor 120 to communicate with a physical I/O device. In various embodiments, the underlying physical I/O device may be coupled to any of processor devices 112 and may send data to processor devices 112 and receive data from processor devices 112. The underlying I/O device may utilize any suitable communication protocol, such as PCI, PCIe, Universal Serial Bus (USB), Serial Attached SCSI (SAS), Serial ATA (SATA), InfiniBand, Fibre Channel, an IEEE 802.3 protocol, an IEEE 802.11 protocol, or other current or future signaling protocol.

The underlying I/O device may include one or more ports operable to communicate with cores of the processor devices 112. In one example, the underlying I/O device is a physical NIC or physical switch. For example, in one embodiment, the underlying I/O device of I/O device driver 124 is a NIC of communication interface 118 having multiple ports (e.g., Ethernet ports). In some implementations, I/O virtualization may be supported within the system and utilize the techniques described in more detail below. I/O devices may support I/O virtualization based on SR-IOV, SIOV, among other example techniques and technologies.

In other embodiments, underlying I/O devices may include any suitable device capable of transferring data to and receiving data from processor devices 112, such as an audio/video (A/V) device controller (e.g., a graphics accelerator or audio controller); a data storage device controller, such as a flash memory device, magnetic storage disk, or optical storage disk controller; a wireless transceiver; a network processor; or a controller for another input device such as a monitor, printer, mouse, keyboard, or scanner; or other suitable device.

In various embodiments, when a processing request is received, the I/O device driver 124 or the underlying I/O device may send an interrupt (such as a message signaled interrupt) to any of the cores of the platform logic 110. For example, the I/O device driver 124 may send an interrupt to a core that is selected to perform an operation (e.g., on behalf of a virtual machine 132 or a process of an application). Before the interrupt is delivered to the core, incoming data (e.g., network packets) destined for the core might be cached at the underlying I/O device and/or an I/O block associated with the processor device 112 of the core. In some embodiments, the I/O device driver 124 may configure the underlying I/O device with instructions regarding where to send interrupts.

In some embodiments, as workloads are distributed among the cores, the hypervisor 120 may steer a greater number of workloads to the higher performing cores than the lower performing cores. In certain instances, cores that are exhibiting problems such as overheating or heavy loads may be given less tasks than other cores or avoided altogether (at least temporarily). Workloads associated with applications, services, containers, and/or virtual machines 132 can be balanced across cores using network load and traffic patterns rather than just processor device and memory utilization metrics.

The elements of platform logic 110 may be coupled together in any suitable manner. For example, a bus may couple any of the components together. A bus may include any known interconnect, such as a multi-drop bus, a mesh interconnect, a ring interconnect, a point-to-point interconnect, a serial interconnect, a parallel bus, a coherent (e.g., cache coherent) bus, a layered protocol architecture, a differential bus, or a Gunning transceiver logic (GTL) bus.

Elements of the data system 100 may be coupled together in any suitable manner such as through one or more networks 108. A network 108 may be any suitable network or combination of one or more networks operating using one or more suitable networking protocols. A network may represent a series of nodes, points, and interconnected communication paths for receiving and transmitting packets of information that propagate through a communication system. For example, a network may include one or more firewalls, routers, switches, security appliances, antivirus servers, or other useful network devices. A network offers communicative interfaces between sources and/or hosts, and may comprise any local area network (LAN), wireless local area network (WLAN), metropolitan area network (MAN), Intranet, Extranet, Internet, wide area network (WAN), virtual private network (VPN), cellular network, or any other appropriate architecture or system that facilitates communications in a network environment. A network can comprise any number of hardware or software elements coupled to (and in communication with) each other through a communications medium. In various embodiments, guest systems 122 may communicate with nodes that are external to the datacenter 100 through network 108.

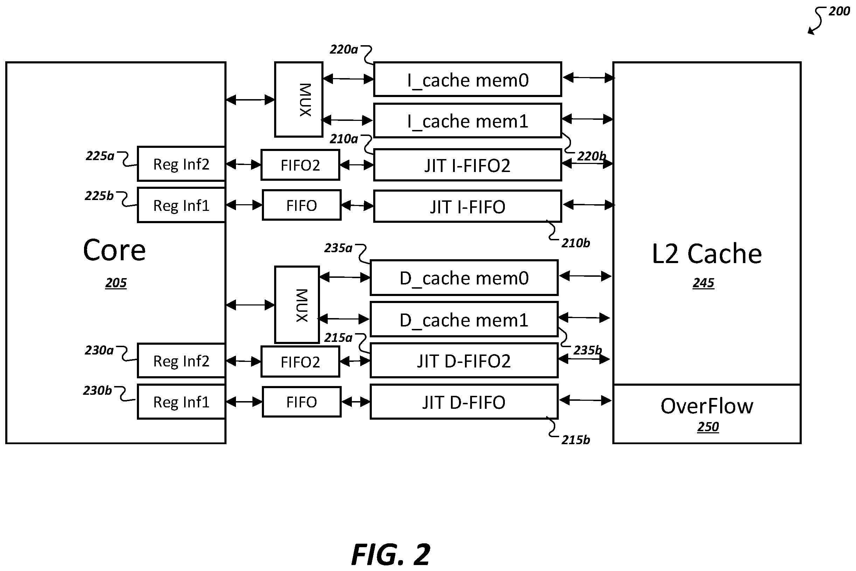

A datacenter 100, such as shown and discussed in FIG. 1, may include one or more software-configurable processor devices, such as discussed herein. Turning to FIG. 2, a portion of an example configurable processor device is shown. The processor device may include a set of processor cores (e.g., 205) and storage elements to implement cache memory (or processor memory), such as L1 cache memory, L2 cache memory, L3 cache memory, etc. A portion of the storage elements may be configurable to implement both conventional L1 cache and high-speed just-in-time (JIT) queue, such as first-in-first-out (FIFO) queues, or "FIFOs" (e.g., 210a-b, 215a-b), to deliver data and/or instructions more efficiently to the register file(s) of the processor core 205 (e.g., without the additional processing and algorithms (e.g., replacement and ordering) performed when moving data to the core using a traditional L1 cache configuration). In other instances, the cache storage elements may be programmatically configured to implement queues other tan FIFO queues (e.g., last-in-first out (LIFO)), memory stacks, scratch pad memory structures, among other examples. In the case of a queue, such as a FIFO queue, the queue may be implemented as a JIT queue by configuring the queue to be fed (e.g., written to) in a continuous or scheduled manner such that, when in operation, the queue is not overfed or underfed (to the extent a workload is available). For instance, logic associated with corresponding L2 cache or logic of intelligent routing hardware (e.g., implemented as a smartNIC, infrastructure processing unit (IPU), data processing unit (DPU), edge processing unit (EPU), etc.) pushing data to the processor may cause data to be fed to the FIFO according to a time-based schedule aligned with the rate of consumption or execution of the processor cores pulling information from the FIFO, among other example implementations.

In some implementations, the various cores on the processor device may have corresponding cache/FIFO storage elements and the hardware implementing these storage elements may be configured to all be L1 cache, to all be entirely FIFOs, or to implement a mix of L1 cache and FIFOs. While both cache and a FIFO are meant to efficiently deliver data to a processor, a cache includes replacement policies and ordering algorithms that are foregone by a FIFO. Consequently, the FIFO may function as a simplified, high-speed pipeline for feeding data and instruction directly to the core's registers (e.g., 225a-b, 230a-b, etc.) for processing by processing hardware of the core 205. The provision of data or instructions through a JIT FIFO to a register file of the core may implement one or more FIFO register interfaces for the core, among other example implementations.

In the example of FIG. 2, storage structures may implement a set of caches (e.g., 220a-b) at an instruction register interface 225a-b, with the set of caches 220a-b used to provide instructions to the core 205 for execution using the arithmetic logic units (ALUs), execution units, and other processing elements (also referred to herein collectively as "processing elements") of the core 205. A data interface 230a-b may also be provided with a set of L1 cache structures 235a-b used to provide the core 205 with data to be operated upon in association with the instructions provided and executed by the core 205. In this example, one or more instruction FIFOs (e.g., 210a-b, 215a-b) may also be provided through the storage structures of the core to provide instructions and/or data to the core 205 as an alternative to caches (e.g., 220a-b, 235a-b, etc.). The FIFOs (e.g., by omitting replacement and the (potentially) more complex ordering algorithms used in traditional CPU caches) may allow instructions (from one FIFO (e.g., 210a)) and data (from another FIFO (e.g., 215a)) to arrive at the core 205 at the same time (e.g., on the same clock cycle). Multiple FIFO-based data interfaces and/or multiple FIFO-based instruction interfaces may be provided at respective cores in a processor device to allow multiple instructions to be executed by execution unit hardware of the core per clock. The use of simplified FIFO structures may enable higher bandwidth data and instruction throughput to a core than in traditional Harvard-based architectures, where a cache implements a single instruction interface and a single data interface, among other examples. Further, through the provision of multiple JIT FIFO-based instruction and/or data interfaces per core, a single core may be configured to function like a Single Instruction Multiple Data (SIMD), Multiple Instruction Single Data (MISD), or Multiple Instruction Multiple Data (MIMD) machine, which may be leveraged to implement a variety of designs in a system (e.g., a system on chip, chiplet, or other processor device) including multiple such cores.

In some implementations, FIFOs may be utilized in lieu of caches to accelerate and manipulate the manner with which data and/or instructions are provided to the core 205. In a multi-core system, respective FIFOs may be utilized to custom-configure an architecture of the multi-core system to implement a specialized processor or accelerator architecture for use within a computing system, such as a data center. A high-speed FIFO structure may have a fixed length and may possibly be filled faster than the corresponding core is able to execute instructions in the queue or consume data in the queue. Accordingly, in some implementations, a FIFO overflow (e.g., 250) may be provided (e.g., in the core's L2 cache 245, an L3 cache, network cache, or other cache provided on the processor device) to capture instructions and/or data intended for the core 205 when a corresponding FIFO (e.g., 210a-b, 215a-b) is at capacity. The instructions and/or data in the overflow may be fed to the corresponding FIFO as soon as an entry in the FIFO opens up, among other example features.

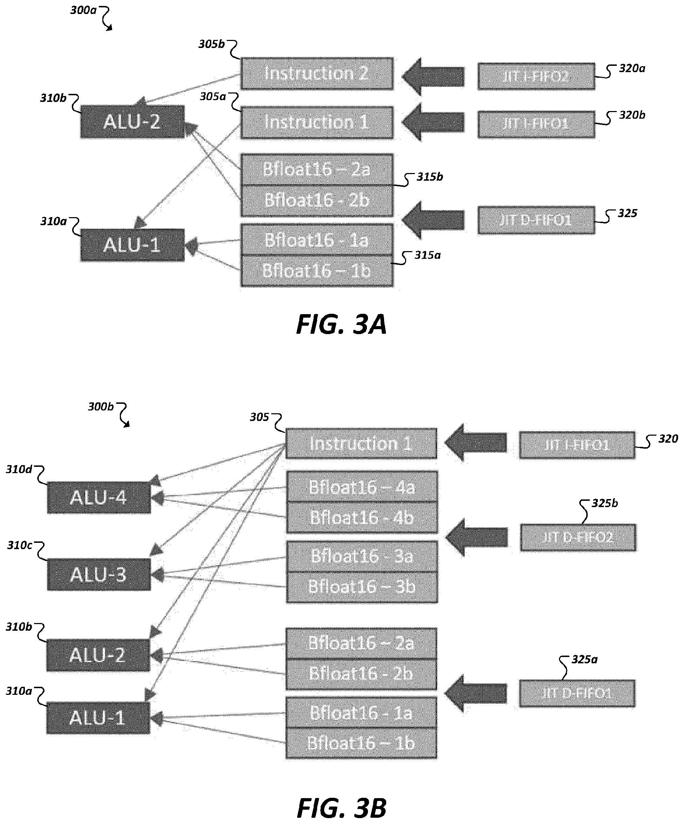

Turning to FIGS. 3A-3C, simplified block diagrams 300a-c are shown illustrating example portions of processor devices, where multiple JIT FIFO structures (e.g., 320a-b, 325a-b, etc.) are provided. The use of multiple JIT FIFOs may enable a processor device to be configured to behave more like a special-purpose hardware accelerator, rather than a general purpose processor. For instance, in the example of FIG. 3A, multiple instruction FIFOs (e.g., 320a-b) and one or more data FIFOs (e.g., 325) are provided, where the instruction FIFOs may be used to input respective instructions (e.g., 305a-b) to ALUs (e.g., 310a-b) of a processor core attached to the FIFOs, and data FIFO 325 may be used to provide various data (e.g., 315a-b) to the ALUs 310a-b to be executed in connection with a respective one of instructions 305a-b. For instance, instruction 305a may be input to ALU 310a to operate upon data 315a and instruction 305b is input to ALU 310b to operate upon data 315b. FIG. 3A illustrates an example implementation of a multiple instructions, multiple data (MIMD). Turning to the example of FIG. 3B, multiple data FIFOs (e.g., 325a-b) may be provided for a processor core in some implementations. In this example, a single instruction 305 may be provided in parallel (through instruction FIFO 320) to multiple ALUs (e.g., 310a-d), with different data (e.g., 315a-d) provided (through respective data FIFOs (e.g., 325a-b) for consumption during the execution of each instance of the instruction 305 at each of ALUs 310a-d. In FIG. 3B, a single instruction, multiple data (SIMD) implementation is shown.

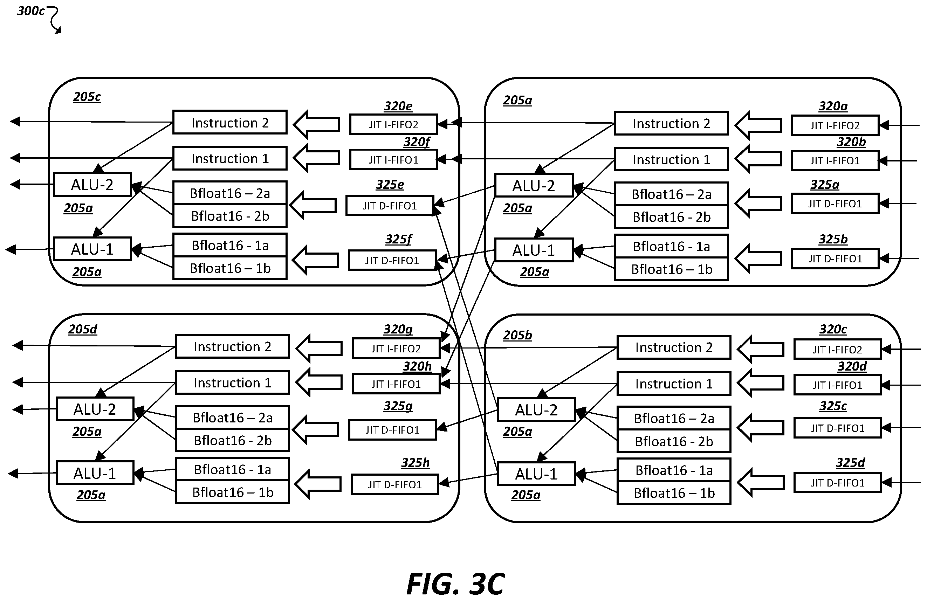

Turning to the example of FIG. 3C, an example is shown where outputs of various cores (e.g., 205a-d) and its respective execution units (e.g., 310a-h), such as ALUs, may be fed directly into JIT FIFOs (e.g., 320a-h, 325a-h) of another core (to be fed into an execution unit (in the same or a different core)) of a processor device. In this manner, data and/or instructions may be cascaded in any intended pattern to implement logic comparable to a purpose-built hardware accelerator. In some implementations, instructions may dictate the path from an output of an execution unit to the FIFO of a next execution unit. For instance, instructions may pass data to a next execution unit. In some implementations, instructions may be timed to meet the data at the next execution unit. Configuration of the flow of data and/or instructions from execution unit outputs to FIFOs of a processor device may enable the processor device to be configured into a variety of different architectures (e.g., logical architectures to mimic a particular neural network, mimic a vector processing accelerator, among other examples). Such configuration may be performed prior to execution of instructions (based on a configuration definition provided to the processor device) and/or at least partially dynamically with routing/execution of downstream instructions or data dependent on and selected according to the results generated during execution of other earlier upstream instructions (e.g. on the same or a different core), among other examples.

Referring again to the example of FIG. 3C, in one illustrative example, the flow of data from one core (e.g., 205a) to another (e.g., 205c-d) may be based on the results of an earlier instruction executed at a core (e.g., 205a). The instruction itself may indicate a path of the output, such as placing an instruction or data in a particular FIFO (e.g., 320e-h, 325e-h) of another core or the loopback of an instruction or data back to the core's own FIFO. Data or instructions provided to a FIFO based on a prior instruction's execution may be the same data or instruction or a different or modified version of the data or instruction, based on the desired operation of the core (e.g., in conjunction with configuring the core to behave as a particular processor type), among other examples.

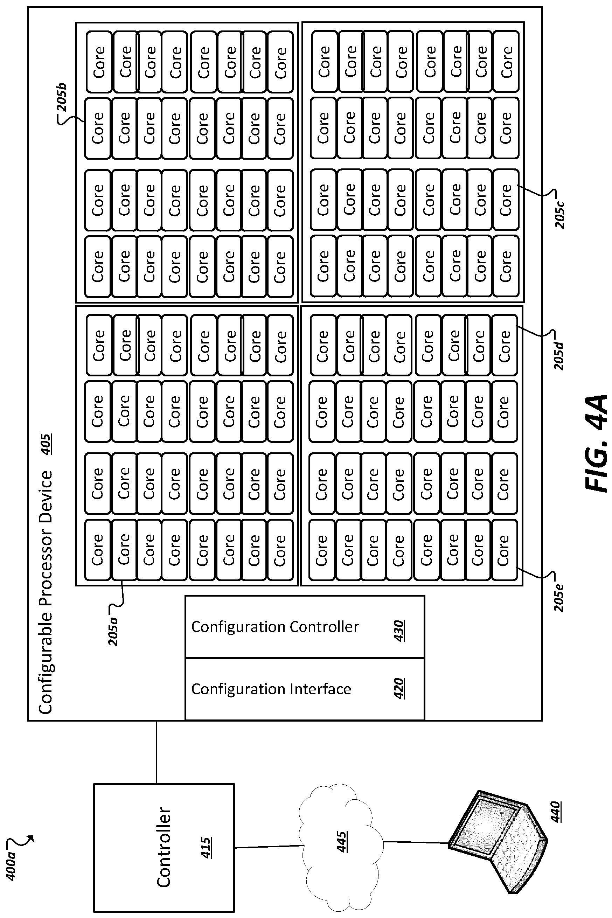

Turning to FIG. 4A, a simplified block diagram 400a is shown of an example processor device 405, including an array of processing cores. Processing cores (e.g., 205a-e) in the processor device may include various execution units (e.g., ALUs) and have respective configurable cache/FIFO storage elements, which may be configured to implement one or multiple JIT FIFOs for the cores. In one example implementation, storage elements of the cores may be configurable through a software-defined definition for the processor device 405 (e.g., using a software-based or on-board or on-package controller 415, which may provide a configuration definition for the processor device 405 (e.g., through interface 420) to implement a set of JIT FIFOs or more traditional CPU cache for the core, among other configurations of the cores and processor device hardware (e.g., an on-chip network of the processor device, etc.).

Configuration of the cores' storage elements may be designed in concert with a wider configuration defined to cause a core to behave as one of multiple potential processor types, including a traditional CPU core, a core of another processor device (e.g., a GPU, TPU, etc.), or hardware accelerator device. In this manner, a configuration definition may be provided by software (e.g., 415) to a processor device 405 (e.g., implemented as a system on chip (SOC), system in package (SIP), one or more application-specific integrated circuit (ASIC) devices, or other processor device with multiple cores and other supporting hardware blocks) to configure cores in the processor device to implement a respective processor device type. For instance, the configuration definition may be processed by configuration controller hardware 430 on the processor device 405 to define its cores' respective FIFO/cache elements, as well as the on-chip networks or interconnect fabric coupling the various cores of the processor device 405, multiplexer fabrics coupling FIFO/cache elements to execution units (or related register files) of the cores, interconnects or configurable flows between execution units (e.g., ALUs) of a single core, among other configurable components. The configurable components of individual cores and the processor device as a whole may be so configured (according to a provided configuration definition) to cause the one subset of cores of the processor device to be temporarily configured (e.g., in connection with a specific customer's workload or application) to implement a first type of processor or accelerator and other cores in the processor device to implement a different, second type of processor or accelerator, among other examples. Through such a processor device (e.g., 405), servers and data centers may provide services and infrastructure to enable clients (e.g., 440) to define and configure combinations of custom accelerators and processor types specially adapted to the workload of the client. Such solutions may implement more deterministic solutions (e.g., with few if any cache misses, elimination of noisy neighbors on caches, lower power servers, lower latency solutions, etc.), among other example advantages. In some implementations, a smart network controller (e.g., a smartNIC or infrastructure processing unit (IPU)) may be utilized to couple to a network 445 and intelligently direct (e.g., via direct I/O access to the cache data structures of the cores (e.g., 205a-e)) requests and related threads to specifically configured cores on the device 405 for execution, among other examples.

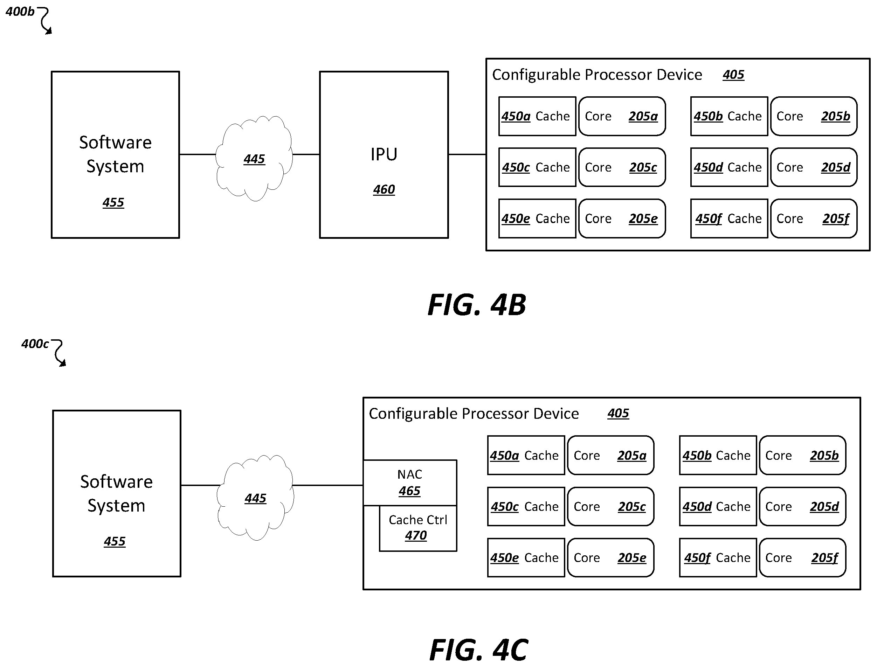

**In** FIG. 4B, a simplified block diagram 400b is shown illustrating an example implementation of a software-configurable processor device 405, such as the device shown in the example of FIG. 4A. In some implementations, an infrastructure processing unit (IPU), smartNIC, or other external enhanced routing hardware (e.g., 460) may be provided to assist in programming and selectively directing workflows within a configurable processor device 405. When the various cores (e.g., 205a-f) of the processor device 405 have been configured in accordance with a configuration definition provided by the software system 455), for instances, through the configuration of the corresponding cache blocks (e.g., 450a-f) of the cores 205a-f, the routing hardware (e.g., 460) may be utilized to precisely direct software workloads for execution on appropriately configured cores of the processor device 405. For instance, the routing hardware 460 may couple to the processor device 405 using a PCIe, CXL, or other interconnect technology and may couple to one or more software systems (e.g., 455) over one or more networks 445. The routing hardware 460 may be equipped with logic and permissions to implement an interface (e.g.., a data direct I/O (DDIO) or similar interface) that enables the routing hardware 460 to directly write to individual cache blocks (e.g., 450a-450f) of specific corresponding configurable cores (e.g., 205a-205f) to write particular instructions to the specific cores associated with software workflows. Further, the routing hardware 460 may include hardware acceleration circuitry to perform packet inspection or other processing of incoming data (e.g., thread data from software system 455) received from a software system 455 in order to appropriately direct corresponding data, and instructions to specifically configured cores for execution on the cores. In some implementations, such as shown in FIG. 4C, all or a portion of the functionality provided by an external routing hardware device (e.g., 460) may instead be implemented on the processor device 405 itself, such as through a network acceleration complex (NAC) 465 and cache controller 470. Data corresponding to software workloads may be sent from the software system 455 to the processor device 405 over the network 445. The data may be inspected (e.g., by NAC 470 to identify instructions and data corresponding to specific types of workflows or threads and identify specifically configured cores (e.g., 205a-f) that have been configured to accelerate execution of such workloads) and written to respective cache blocks (e.g., 450a-f using the cache controller 470 to provide instructions and data for execution by specific cores 205a-f in the processor device 405, among other example implementations.

In a processor device utilizing processor cores with a cache interface including JIT FIFOs, a configuration definition may be input to the processor device to configure various cores to implement or function as various different processor types and architectures coupling these different processor types within a system for use in executing a workload. For instance, processor cores may be configured to implement functions such as general purpose processors (e.g., CPUs), tensor processor units (TPUs), graphics processors (e.g., GPUs), network processing units (e.g., NPUs), vector processing units (VCUs), compressing engine units (e.g., CEUs), vision processing units (VPUs), encryption processing units, storage acceleration units (e.g., NVMe, NVMeoF, etc.) (SAU), protocol accelerator units (PAUs) (e.g., for RDMA acceleration), quantum emulation accelerators (QEAs), matrix math units (MMUs), among other examples. A server class processor device (e.g., a Xeon class processor) including an array of cores, may be enabled to implement, based on a configuration definition, an array of different (or the same) processor type. In some instances, the cores may be configured to operate as traditional CPUs (e.g., running a Linux or Windows operating system). In other instances, a configuration definition may cause some (or all) of the cores to be configured to instead function as a non-CPU processor (e.g., a TPU, NPU, accelerator, etc.). A single core in the array may be configured and reconfigured over time to function as various different processor types, including CPU cores and non-CPU processors and accelerators, among other examples.

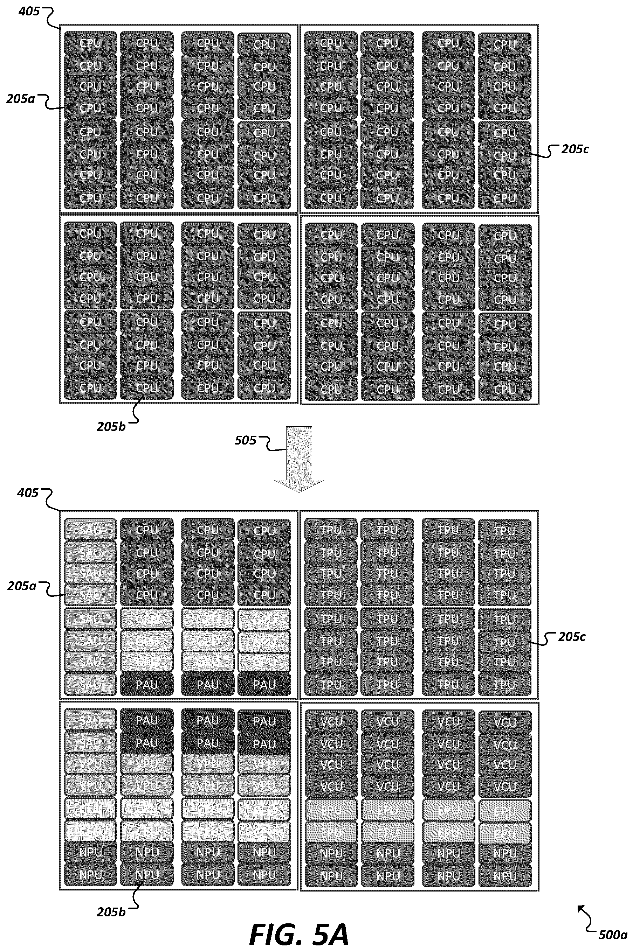

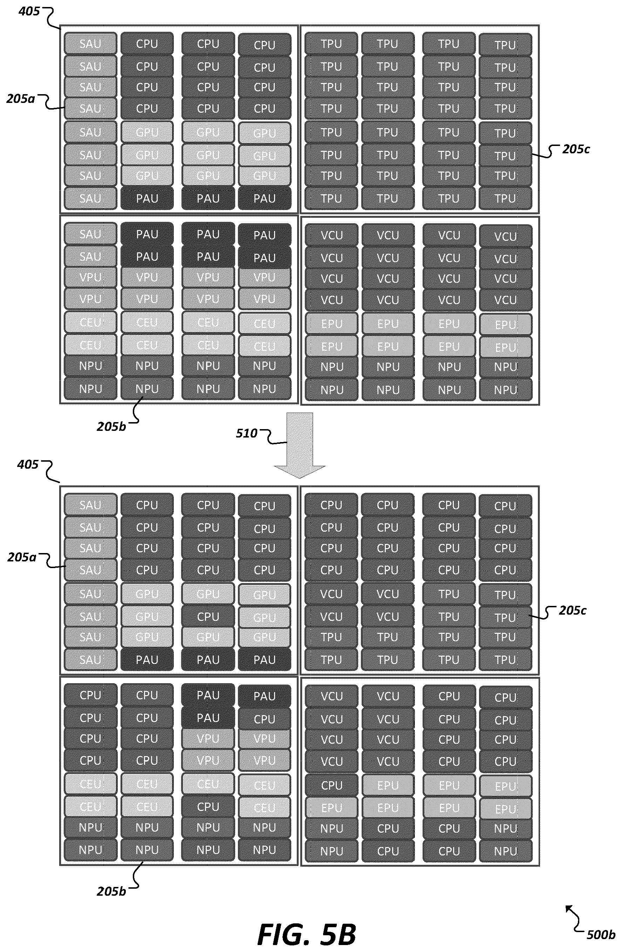

Turning to FIGS. 5A-5B, example configurations of an example processor device are shown. In the example of FIG. 5A, all the cores of a processor device 405 may be configured function as CPU cores (e.g., by enabling or configuring cache interfaces of the cores to function as traditional L1 or CPU caches). A software controller (e.g., executing on a particular core on the processor device) may send a configuration definition 505 to the processor device to change the configuration of various cores of the device to modify the configuration of these cores from a CPU function to a different processing function. For example, some cores (e.g., 205a) can be configured as SAUs, other cores (e.g., 205b) configured as NPUs, and still other cores (e.g., 205c) configured as TPUs, etc. As an example, the configuration definition 505 may be provided in association with a given customer or application taking temporary "ownership" of the processor device for a workload, the configuration designed to provide an optimal mix (and interconnection) of different processor components (e.g., CPUs, NPUs, TPUs, VPUs, etc.) for the customer or application's workload. At a later time or in a later session, as shown in the illustration of FIG. 5B, another configuration definition 510 may be received to convert the functions of the cores of the processor device 405 from the configuration driven by configuration definition 505 (in FIG. 5A) to a new different configuration.

In some implementations, such software-delivered configuration definitions (e.g., 505, 510, etc.) may be controlled by one of the processing elements in the system (e.g., to implement a configuration interface for the processor device). For instance, a particular CPU core in the server, or a CPU core on each chiplet of the processor device may be designated and configured for receiving a configuration definition and implementing the corresponding configuration on the cores of the device. In some implementations, to address potential security issues, cores configured to operate as general processing units (e.g., CPUs) may be secured and run security protocols. Cores that are used as accelerators, or other specialized processors may be left unsecured by traditional security solutions and may instead have their security managed and directed by another entity (e.g., such as another processing element, or an external device like an IPU, DPU, EPU, etc.), among other examples. Further, in some implementations, cache coherency may be maintained among at least a subset of the cores of the processor device, like CPUs running a traditional operating system, where coherency of the caches may be centrally maintained, but for other cores (e.g., implementing an accelerator or other specialized processor) traditional cache coherency may be set aside, in favor of a more efficient and streamlined approach (e.g., using JIT FIFOS instead of traditional cache structures or in combination with traditional cache structures), among other examples.

Applications and individual threads within an application may be directed to specific processor device cores, which have been configured to accelerate one or a series of functions associated with the thread or application. In some implementations, a smartNIC, infrastructure processing unit (IPU), or other advanced networking or routing device may be utilized to assist in directing individual applications, threads, or workloads to particularly configured cores of an example processor device. For instance, through a direct I/O protocol, an advanced networking device may identify the configuration of particular cores within a processor device coupled to the networking device and utilize a direct I/O protocol to write instructions and/or data to an appropriate cache of the core (e.g., L2 cache). These instructions and data may be pushed to FIFOs implemented in L1 cache storage hardware of the core, among other example implementations. Further, a server including a software-configurable processor device may be configured to implement a specific one of a collection of different processor types (such as described herein) in anticipation of a workload, application, or thread that is to be executed using the server. For instance, a smartNIC, infrastructure processing unit (IPU), or other advanced networking or routing device may be utilized to send a configuration definition to a processor device coupled to the advanced networking device. As an example, an application which includes workloads that involve video processing and matrix arithmetic may be identified along with a corresponding configuration definition and the configuration definition may be sent to the processor device to cause the cores and network of the processor device to be configured to include cores implementing tensor processing or vector processing units and video processing units (VPUs) to more efficiently processing and accelerate functionality that is anticipated to be called upon in association with executing the example application, among other example with corresponding configuration definitions.

As noted above, a smartNIC, IPU, or other controller may be utilized to ensure threads and corresponding data (for consumption in the threads) are directed to the appropriately configured cores of a processor device. In one example, an IPU can parse incoming packets and determine the flows associated with the packets. This information helps the IPU understand the application being run. The IPU may launch its own threads to process the incoming data and identify specific processing elements configured to process the incoming threads and/or data. In some implementations, the processing elements (e.g., cores) may be configured by the IPU. The data to be consumed by the thread(s) may be similarly directed to the processing elements running the corresponding thread(s).

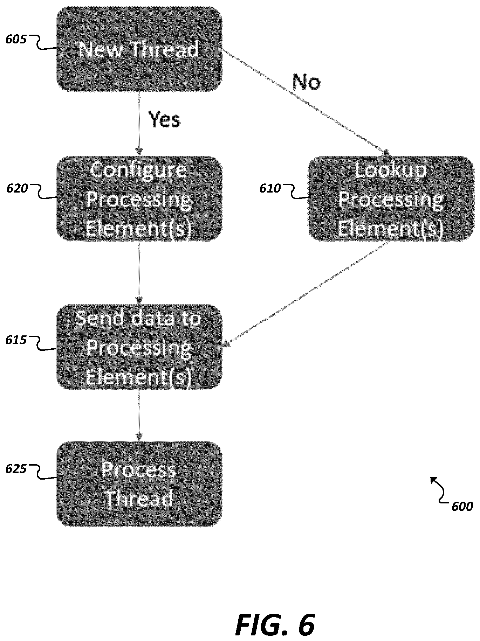

Turning to FIG. 6, a simplified flow diagram 600 is shown of an example technique for directing specific software workloads (e.g., identifiable as particular threads, by process identifier, process address space identified (PASID), name space identifier, specialized tag data (e.g., appended to the workload), among other examples) to specific processing elements configured advantageously for or based on the thread. A thread may be identified (e.g., by routing hardware), and it may be determined 605 if this is an instance of a familiar or previously processed thread or if the thread is a new thread. In the case of a familiar thread, a lookup 610 may be performed (e.g., by software, routing hardware, or another controller) to identify one or more processing elements, which have been configured to implement functionality useful or optimized for the familiar thread and the thread may be passed 615 (again) to such configured processing elements. In the case of a new or unfamiliar thread, in some implementations, a configuration definition may be provided to a processor device to configure 620 at least a subset of cores or other processing elements of the processor device to implement processing hardware well-adapted or optimized to the thread. Upon configuration of the processing elements to enable them to more efficiently process the thread (e.g., configuration of the processing element to implement a hardware accelerator for the thread), the thread may be sent 615 to the processing element. Additionally, data that is to be processed in connection with the execution of the thread may also be sent to the corresponding, configured processing element and processed 625 with the thread. In one example implementation, a controller, IPU, or other device may assist in the distribution and routing of particular threads and data to various processing elements, as well as with the introduction of configuration definitions to the processor device to initiate configuration of one or more processing elements of the processor device. For instance, a packet or group of packets may arrive at an IPU coupled to the processor device. The IPU may determine if a new thread should be started for processing the incoming network data. Being the first packet, the IPU could configure the processing elements connected to it such that they can process the thread efficiently. Then the data may be sent to the processing element or elements and the thread is processed. Later data associated with that thread may require a look up to determine how to send the data to the processing element. Then the thread can process that data.

In some implementations, to make the processing more deterministic, time slots can be set up to configure the processing of a given thread. In such an implementation, hundreds and thousands of threads may utilize the same hardware, with the hardware being repeatedly reconfigured to best process the current thread. As data arrives at JIT FIFOs of a processing element, a command in the FIFO may indicate data and/or instructions to load in the cache, processing element configurations, and other items to quickly process the incoming data. A processing element may be provided with multiple JIT FIFOs, where the processing element completes one FIFO, before accessing the next FIFO. In such a case, different JIT FIFOs could be used in association with the processing of different threads, among other examples.

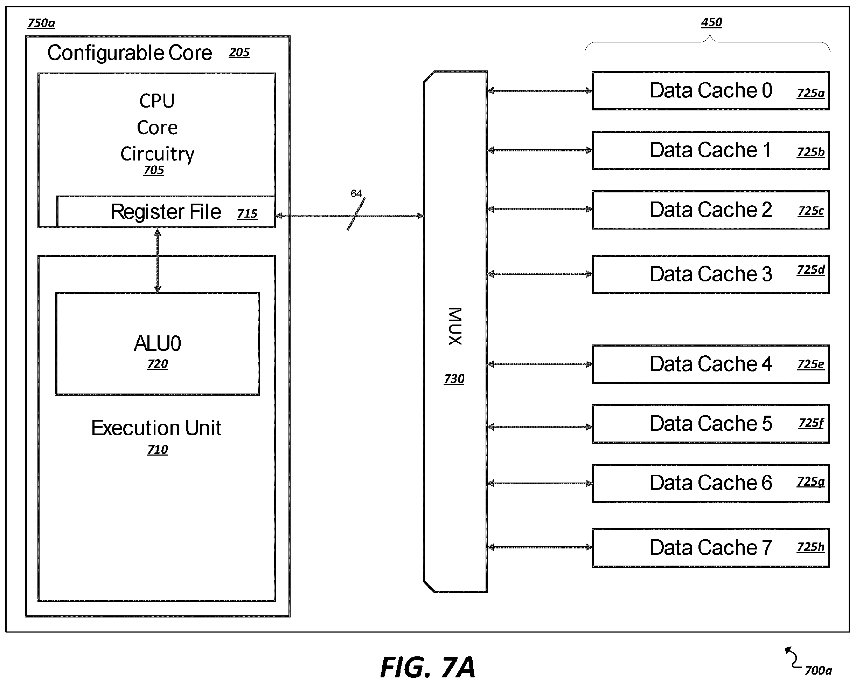

Turning to FIGS. 7A-7B, simplified block diagrams 700a-b are shown illustrating the example configuration of example cores (also referred to herein as "core complexes") included within an example software-configurable processor device (such as illustrated in the examples of FIGS. 4A-5B). For instance, FIG. 7A shows an example default configuration of a core complex 750a, configured to operate as a traditional CPU core. For instance, in a default configuration, the core's 205 cache block 450 is configured to implement an L1 cache block for the core 205. Multiplexer circuitry 730 may implement a single interface between the cache and the register file 715 of the CPU core logic, which utilizes execution units (e.g., 710) configured to implement a standard CPU core (e.g., including an ALU 720)). In some implementations, in response to a new thread or workload to be executed on the processor device, a configuration definition may be applied to the processor device to reconfigure one or more of the cores (e.g., 205) to adapt the cores to accelerate execution of the new incoming workload. For instance, the core complex 750a may be identified for reconfiguration and the cache (e.g., 725a-h) may be flushed in response to the configuration definition (e.g., and after the execution units have completed processing any remaining workloads under the default CPU core configuration. For instance, a memory management unit (MMU) of the processor device or core complex may be called upon to flush those portions of cache memory (e.g., 725e-h) for a core that will be configured for use as FIFOs (e.g., with potentially other portions of cache memory (e.g., 725a-d) being preserved to continue functioning as L1 cache), among other examples. A configuration controller of the processor device may the cause the caches (e.g., 725a-h), multiplexer 730 logic, and other elements of the processor device (e.g., the configuration of the execution units 710 to be reconfigured in accordance with the configuration definition.

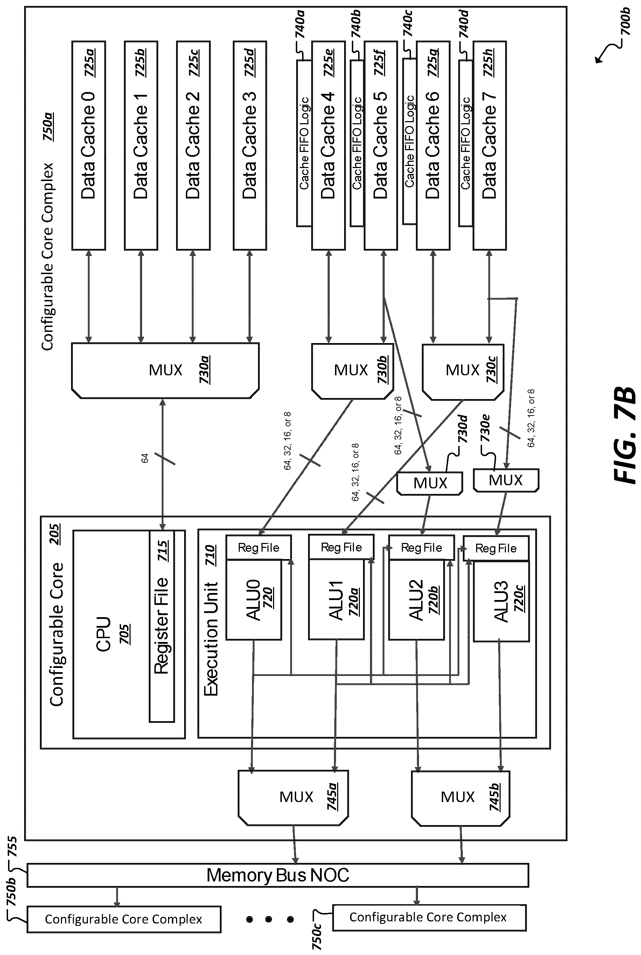

Turning to FIG. 7B, an example reconfiguration of the core complex 750a is shown. A configuration definition may consider the attributes of the core complex 750a that are configurable (e.g., as some cores or processor devices may only enable certain attributes and elements of the core complex to be reconfigured) and identify, for at least a set of the cores on a software configurable processor device, how the cores are to be reconfigured. In some instances, the configuration definition may identify a number of (e.g., interconnected) cores that are to be reconfigured and the configuration controller of the processor device may determine, which specific cores are available to be and/or should be reconfigured responsive to the configuration definition. In other implementations, a configuration definition may specify (e.g., for each of the configurable cores on the processor device) the reconfiguration to be applied to each respective core, among other examples.

In the particular example of FIG. 7B, the reconfiguration causes the cache block of the core 205 to be reconfigured from an L1 cache to a set of FIFOs (e.g., after flushing of the cache blocks), including FIFOs designated as data FIFOs and FIFOs designated as instruction FIFOs, by enabling cache FIFO logic (e.g., 740a-d) for those cache elements (e.g., 725e-h) that are to be reconfigured to operate as FIFOs (e.g., JIT FIFOs). To cause the respective FIFOs to feed into the execution logic 710 of the core 205 in a defined way (e.g., in order to implement some form of hardware accelerated execution), multiplexer circuitry may be reconfigured into multiplexer subblocks (e.g., 730a-e) to cause specific data and/or instruction FIFOs (e.g., 725e-h) to feed data (and potentially also loopback data) to specific execution units (e.g., ALUs 720-720c) and even to other FIFOs, among other examples. Further, in some implementations, execution units and interconnections between execution units (e.g., 720a-c) within the core may be configured in accordance with a configuration definition to define various flows, loops, and outputs for the core 205. Additionally, in some implementations, interconnections and flows between cores (e.g., between core complex 750a and other core complexes (e.g., 750b-c) of other cores of the processor device) may be reconfigured and defined in accordance with a configuration definition (e.g., through configuration of a memory bus network or other network on chip (NOC) 755 of the processor device and/or output multiplexers (e.g., 745a-b) provided in the core complex as reconfigurable blocks) to allow multiple cores in the processor device to be combined together in defined ways, with outputs of one core feeding into inputs of one or more cores (or even looping back to itself) in order to implement particular accelerator or processor types, among other examples. When the configuration is complete, an alert (e.g., in a register or via an interconnect message) may be raised to indicate to a software system or intelligent routing hardware that the configuration is complete and potentially also to identify the specific cores, which have been reconfigured. For instance, with knowledge of the specific cores' new configuration, an IPU, cache controller, or other controller hardware may intelligently route and feed FIFOs (and L1 cache) of respective cores with specific workloads (e.g., instructions and data to be consumed during execution of the instructions), for which the cores are now specially configured to execute.

Continuing with the example of FIG. 7A-7B, after the reconfigured processor device has had the opportunity to execute particular workloads (for which it was reconfigured to execute) a new configuration definition may be received to again reconfigure one or more of the cores. In some implementations, context switching may be enabled, allowing different workloads to be executed on the same cores and some workloads to even interrupt others (e.g., with the interrupted workload's specific instructions and data allowed to be cached (e.g., in L2 or L3 cache) while the context switch occurs, in order to preserve the ability of the interrupted workload to be quickly resumed by repopulating respective data and instructions FIFOs with the cached data of the interrupted workload, among other examples. The new configuration definition may cause the configurable attributes of each of or a subset of all of the reconfigurable cores to be reconfigured. For instance, responsive to receiving a new configurable definition, it may be determined that the cache structures of a given core (e.g., 205) are to be reconfigured (among potentially other elements, including the interconnect matrix of multiplexers (e.g., 730a-e) feeding the execution units 710, the execution units themselves (e.g., 720a-c), and inter-core interconnect matrix elements (e.g., 745a-b, 755, etc.), among other examples. The cache blocks that are to be reconfigured may be flushed as before (e.g., to restore the cache blocks to operate again implement L1 cache or reconfigure the cache blocks in a different FIFO arrangement), with the MMU waiting for the cache blocks to empty and then flushing cache blocks (and potentially also preloading the reconfigured cache blocks with particular instructions and data). Once the various configurable elements of a core complex are reconfigured consistent with the new configuration definition, an alert or notification may be generated to indicate completion of the new configuration and trigger the start of new workloads being routed to specifically configured cores in the processor device to accelerate these new workloads in accordance with the new configurations, among other examples.

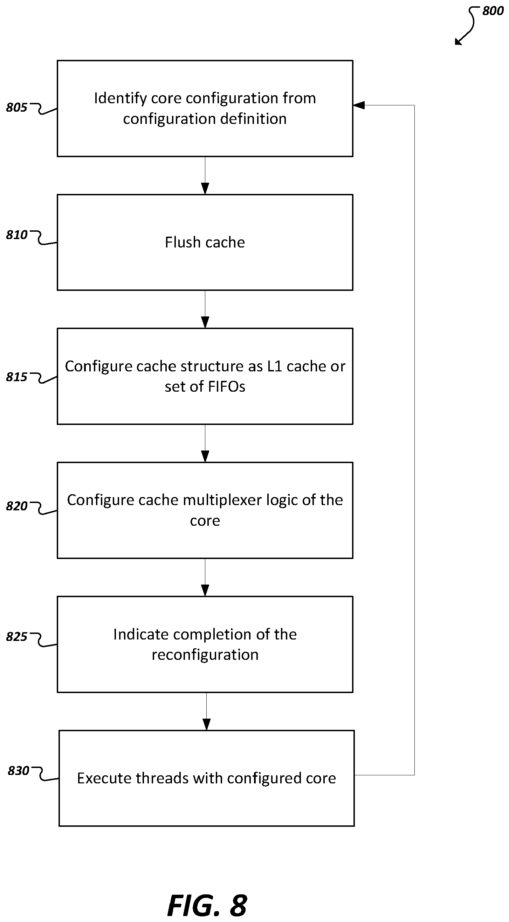

Turning to FIG. 8, a simplified block diagram 800 is shown illustrating an example technique for reconfiguring a core of a software configurable processor device. For instance, a configuration definition may be received, which describes configuration parameters for at least a subset of the configurable core complexes (e.g., cores and associated cache structures) on the processor device. One of the described configurations can be identified 805 to pertain to a particular one of the cores. Based on the described configuration, it may be identified that the cache structure and/or multiplexer interface coupling the cache structure to the core's execution units are to be reconfigured in a specified manner. Based on the reconfiguration of the cache structure, the configuration may include the flushing 810 of the cache structure to be reconfigured. Based on the configuration definition, the cache structure is reconfigured 815 to implement either an L1 cache or a set of FIFOs (e.g., a defined combination of data FIFOs and instruction FIFOs as specified in the configuration definition). The reconfiguration can also include the reconfiguration 820 of the interconnect between the cache structure and execution units (e.g., register files of the core) to ensure that specific cache structures feed respective execution circuitry of the core based on the configuration definition. When the reconfiguration operations have been completed and the cache structures are suitably flushed and ready to accept workloads and data for execution, an indication may be generated 825 (e.g., via an interrupt, register write, sideband signal, interconnect message, etc.) to identify completion of the reconfiguration to one or more software systems to indicate that the new configuration is now live and that workloads may be directed to specific cores (e.g., through writes to their respective cache structures) for execution (at 830). This flow may restart upon the receipt of a new configuration definition or modification of a configuration definition, which defines a new configuration (at 805) of the core, and so on.

As noted above, an improved processor device may include various processing elements (e.g., processor cores) with associated cache/FIFO structures. For instance, JIT FIFOs may be provided for one or more of the processing elements of the processor device to load data into the processing element for quicker execution, in a deviation from traditional Harvard Architecture-based models. Multiple FIFOs could bring in multiple instructions and data streams, that could be executed at once. Additionally, having more bandwidth fed into the processor, the function and performance of the processing element may result in being more like that of an accelerator than a traditional CPU. That is, a single instruction could include multiple execution paths. For example, a single instruction could follow data through an execution unit, and the execution unit's output could then go to multiple next level execution units and or, one or more JIT FIFOs from other processors (e.g., and implement SIMD, MIMD, and single instruction multiple threads (SIMT) units). These instructions could be different depending on the destination.

At a processing element, which is fed with instructions and/or data by corresponding JIT FIFOs, an output of the processing element may be able to be routed to a variety of different elements on the processor device (e.g., using the internal on-chip network or interconnect fabric of the processor device). For instance, the output of a processing element (e.g., a core) may be passed to one or more next processing elements, to the respective JIT FIFOs of such processing elements, into one or more recirculation paths, etc. Different destinations may accept or be adapted to execute different instructions or instruction types. As such, in some implementations, predetermined instructions may be provided as or with the output of the processing element, and different instructions may follow the output data to the next level. For instance, instructions may be provided through an IPU, from higher level cache, or from a memory management unit (MMU) of the device 405, among other examples. Using such an approach, instructions may be potentially executed using less bandwidth, lower latency, and lower power. Further, two or more instructions may be generated from a single (input) instruction and depending on the data path (e.g., as configured based on a configuration definition provided to the processor device), among other examples.

The cache memory structure associated with a single core may be configured to implement multiple FIFOs to provide data and/or instructions to registers of the core. The register interface to the FIFO may allow almost zero latency in the execution of data coming into the CPU on that register interface from the FIFO. Such FIFO-based interfaces may implement data interfaces and/or instruction interfaces. Indeed, the cache block of a core may be configured to implement multiple distinct data FIFO interfaces and/or multiple instruction FIFO interfaces.

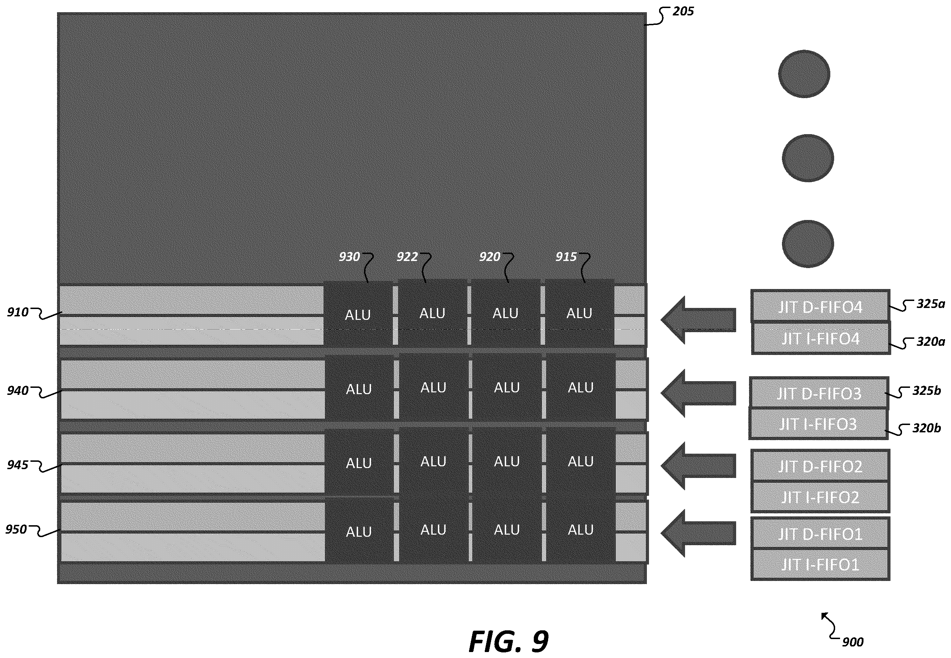

Turning to FIG. 9, a simplified block diagram 900 is shown illustrating an example implementation of a processor core 205. In this example, the core may include multiple execution units, which may be configured to interconnect as staged pipeline (e.g., 910) of execution units (e.g., ALUs), such that the output of one execution unit (e.g., 915) corresponding to a first stage feeds directly into the next execution unit (e.g., 920) associated with the next stage in the pipeline (e.g., 910) and so on through the remaining execution units (e.g., 922, 930, etc.) configured for inclusion in the pipeline 910. For instance, a FIFO (e.g., 320) may feed a given pipeline (e.g., 910) with a series of instructions and corresponding data. For instance, in a pipeline of processing elements (e.g., 915, 920, 930, etc.), a single instruction in the series may follow corresponding data to set up the processing of each processing element in a series of processing elements. For instance, if there are 4 processing elements (e.g., ALUs 915, 920, 922, 930) in a pipeline, the operation of each processing element is included in the instruction that passes with the data from a corresponding JIT data FIFO (e.g., 325) for the pipeline (e.g., 910). Similarly, a JIT FIFO pair (e.g., an instruction FIFO 320 and corresponding data FIFO 325) may be configured and associated with each processing pipeline (e.g., 910) of the core 205.

Continuing with the example of FIG. 9, the output of the processing elements in a pipeline (e.g., 910, 940, 945, 950, etc.) may have multiple alternative paths. These paths could have different purposes and hence involve the execution of different instructions. Accordingly, the output of each processing unit could have registers that have different instructions. For example, output path 910 could get a first instruction from a register fed by instruction FIFO 320a, output path 940 could get a second instruction from a register fed by instruction FIFO 320b, and so on. This would allow multiple instructions to be fed to a single core and executed in parallel (potentially upon different sets of data (e.g., fed by data FIFOs (e.g., 325a-b)). As an illustrative example, a set of 16 instructions may be defined (e.g., and preloaded within a memory element (e.g., a register) of the core 205) to be selected and used in association with any one of the four processing element output paths (e.g., 910, 940, 945, 950). In this example, the 16 instructions could be indexed over time by the incoming instruction (e.g., in accordance with a configuration definition for a processor device). At one time, the incoming instruction could have only one path out and an index for the instruction be "1" (corresponding to selection of a first one of the 16 instructions). The next incoming instruction could also have one path out and an index for the instruction be different, for example "2". The third instruction could have two paths, one with an output instruction index of "1" and one with an output instruction index of "3". The fourth instruction could have 16 paths with each path having one of the 16 indexes. The fifth instruction could have 16 paths all using instruction "1", and so on, such that any combination of any number of outputs could have any combination of instructions. The selection of one of the 16 instructions may cause this selected instruction to then be fed to an instruction FIFO (e.g., at the same or a different core) to cause this instruction to be executed responsive to the incoming instruction that indexed the instruction, among other examples.

The principles illustrated in the example of FIG. 9 may be extended to other architectures. For instance, rather than pipelines implemented through interconnected execution units (e.g., 915, 920, 922, 930) within a single core (e.g., 205), processing elements may be embodied as distinct cores and outputs of cores may be coupled to input FIFOs of other cores (e.g., within the same or different processor devices) to implement a pipeline, similar to or functionality equivalent to a pipeline of execution units, such as those shown in FIG. 9. Similarly, a FIFO pair may be implemented by instruction FIFOs and associated data FIFOs of the cores implementing the pipeline. The output of one core may be used to determine the instruction and/or data fed to a next core's FIFOs in the pipeline, similar to the example of FIG. 9, among other example features. Further, more complex interconnection or pipeline flows may be provided through interconnection of processing elements (e.g., cores, execution units, etc.) to realize more complex architectures (e.g., beyond the simplified examples of purely horizontal or vertical flow paths, etc.).

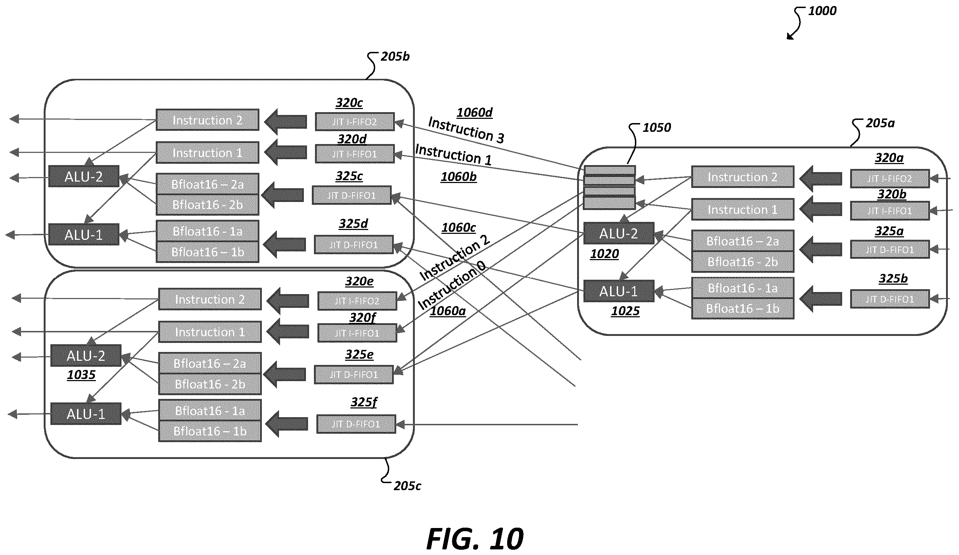

Turning to the simplified block diagram 1000 of FIG. 10, cores 205a-c are shown, with respective instruction FIFOs (e.g., 320a-f) and data FIFOs (e.g., 325a-f). In some implementations, a configuration definition may define pipeline flows between execution units within a single core or between cores, that allows for an output of the execution of a preceding instruction (e.g., by core 205a) to drive the selection of a next instruction or data to be fed to the FIFO of a downstream core for execution. In this sense, the instruction or data fed into a FIFO (e.g., 320c-f, 325c-f) may be dependent on the results generated in the execution of other instructions upstream in the pipeline flow. As an example, in FIG. 10, the output of core 205a may drive which instructions are fed to cores 205b, 205c for execution (e.g., in accordance with a configuration definition that aims to cause the cores 205a-c to function as a particular processor or accelerator type, etc.). For instance, a given instruction may be selected and forwarded from a core 205a to (e.g., written to) the instruction FIFO (e.g., 320c-f) of one or more other cores 205b-c, such that the selected instruction(s) are executed on those other cores (e.g., which may be configured in a manner that adapts the cores to execute such an instruction in an accelerated manner). As an example, the core 205a may be fed one or more instructions (through instruction FIFOs 320a,b) for execution using execution units (e.g., 1020, 1025) of the core 205a, the instructions consuming data provided to the core 205a via its data FIFOs (e.g., 325a,b). Results may be generated from the execution of these instructions. The core 205a may include storage 1050 to store a set of alternative instructions for selection based on the results of the instructions executed on the core 205a. For instance, an output of the execution may identify (e.g., through a code) which of the alternative instructions to write to an instruction FIFO (e.g., 320c-f) of a neighboring core (e.g., 205b,c). Additionally, the outputs may identify a destination core or FIFO to write the selected instruction to. For instance, in the example of FIG. 10, the output of the core 205a may cause an instruction 1060a to be selected to be written to FIFO 320f (of core 205c), an instruction 1060b to be selected to be written to FIFO 320d, instruction 1060c to be written to FIFO 320e, and instruction 1060d to be written to FIFO 320c, among other examples (based on the respective configuration definition used to configure the processor device and its component cores, cache storage elements, and interconnect fabric). In this example, had the results of the execution of the instructions at core 205a been different, different instructions may be selected (from 1050) to be written to the same or different destination FIFOs. In still other examples, the destination selected may be a FIFO (e.g., 320a, 320b) of the core (e.g., 205a) where this collection of alternative instructions is maintained (and preprogrammed), among other examples. Additionally or alternatively, the output of one execution unit and/or core (e.g., 205a) may be used as the basis for determining what data path or location (e.g., core, execution unit, processing element, etc.) to use (e.g., to progress to a first core configured to implement a first type of processor or to a second core configured to implement a different second type of processor). In some paths, a new or next instruction may not be required, for example, the outputs of one or more of ALUs (e.g., of core 205a or core 205b) may be the final stage in a pipeline and may simply be stored (e.g., the data stored and the instruction a null instruction, etc.), among other example implementations.

As introduced in the example of FIG. 10, one configurable core (e.g., 205a) may be configured to interconnect with one or more other cores (e.g., 205b, 205c) such that the output of core 205a is fed to the inputs of one or more execution units of these other cores 205b, 205c. In some implementations, core 205a may be configured to conditionally route an output to the input of one or more other execution units. For instance, a register, cache, or other memory element 1050 may be provided on core 205a to be loaded with multiple alternative instructions. The core 205a may be configured to cause one or more outputs of its execution units (e.g., based on the execution of corresponding instructions fed to these execution units through FIFOs 320a-b) to logically select one of the alternative instructions (e.g., 1060a-d) stored in memory element 1050 to be passed (e.g., via a direct write) to the instruction FIFO(s) (e.g., 320c-f) of one or more downstream execution units (e.g., 1035). For instance, such features may be utilized in an alternative configuration of the cores 205a-c to implement a hardware accelerated neural network on the software configurable processor device. For instance, an instruction fed to execution units in the instruction FIFOs 320a-b of core 205a may result in a code being output that identifies a specific one of the alternative instructions in memory 1050 (e.g., 0 = Add, 1 = Multiply, 2 = Pass, etc.) as well as a destination FIFO (e.g., 320c-f) to which the selected instruction (e.g., 1060a-d) should be pushed from the core 205a (e.g., 0 = destination FIFO 320c, 1 = destination FIFO 320d, 2 = destination FIFO 320e, etc.), to implement particular MAC flows for the neural network, among a variety of other configurations, which may be designed and imaged to accelerate various workloads provided to a configurable processor device for execution.

As noted above in the example of FIG. 9, in a pipeline of processing elements (e.g., ALUs, execution units, or cores), a single instruction delivered to the processing element via a FIFO may follow corresponding data (from a corresponding data FIFO) to setup the processing of each processing element in a series of processing elements. Further, a pipeline of processing elements that execute off a single instruction that follows the data, could also set up the processing elements interconnection of each stage of processing in a series of processing elements. This could allow the output of one processing element go to one or more processing elements in the next stage. Similarly, it could skip stages or recirculate results backwards in the pipeline. Accordingly, a group of processing elements arranged or grouped in pipeline could form a matrix of processing elements, based on the interconnection of stages. As an example, a matrix of four-by-four processing units (e.g., as in the example of FIG. 9) or matrices of other dimensions (e.g., 7x3, 3x15, etc.) could be configured. It should be appreciated that considerably larger matrices of processing elements could be provided on a processor device and configured (e.g., twenty-by-twenty, 100-by-100, etc.) allowing the total number of operations performed per cycle by the processing elements of a processor device to grow accordingly. Additionally, in a pipeline of processing elements, where a single instruction follows the data to configure the data processing or pipeline interconnect, it is possible that a portion of the instruction could be removed or decompressed. This allows the same size instructions to control more ALUs and interconnects. Additionally, the new instructions could be passed to other cores' JIT FIFOs, among other examples.

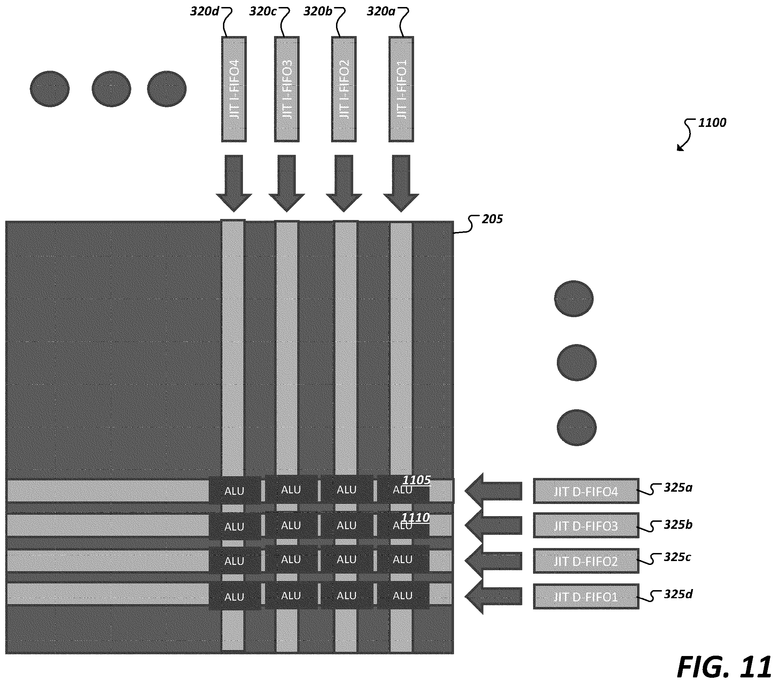

Turning to the simplified block diagram of FIG. 11, a simplified block diagram 1100 is shown illustrating that JIT FIFOs may be utilized to implement instruction FIFOs (e.g., 320a-d) and data FIFOs (e.g., 325a-d) that may enable multi-dimensional execution of instructions and data, for instance, to provide a given instruction to multiple processing elements (e.g., through FIFO 320a) to operate on different respective data provided through multiple data FIFOs (e.g., 325a-d), among other examples. These multiple streams of instructions and data may execute concurrently (e.g., within the same cycle(s)) to implement multidimensional processing units using a single general purpose computing device. Through the use of JIT FIFOs, such implementations may enable more efficient AI and vector processing per core and achieve higher throughput than through traditional Harvard Architecture-based designs, as well as lower power and latency per instruction, among other example benefits.

Continuing with the example of FIG. 11, in one example, data may be provided to processing elements from data FIFOs (e.g., 325a-d) for processing. Some of this data may be passed to a next level of processing elements (e.g., execution units, other cores, etc.) in the system. The instructions may enter via respective instruction FIFOs (e.g., 320a-d) and may dictate or drive the operation of other processing elements within that column. For instance, a single instruction could be executed by all ALUs in that column, or the result of one processing unit (e.g., 1105) may dictate or pass the instruction to be executed by the next processing element (e.g., 1110) in that column, resulting in different processing elements in the same column executing different instructions. In some examples, one or more of the instructions may be bypass instructions that result in data being passed from one execution stage to another without processing, among other examples.

Processing elements may be interconnected by an interconnection fabric or on-chip network, which may be at least partially configurable to cause outputs of a processing element to be directed to one of potentially multiple different interconnected processing elements (e.g., cores on a single processor, execution units in a single core, etc.). In some implementations, the network may be configured to be fixed during execution such that the outputs of the processing elements are always input to respective "partner" processing elements. For instance, the configuration of the network may be defined by a corresponding configuration definition, such that the network is programmed to implement a particular topography. For instance, the processor device may be configured initially for one workload or data set such that all data going through the collection, array, or pipeline of processing elements does not change for that data or workload. In another instance (e.g., for a later workload or data set), the configuration definition may enable the flow of data or instructions to be dynamic and change during use of the processor device. For instance, in the dynamic case, the interconnect between the processing elements may be based on the instructions that are input to the processing elements and the results from the execution of the instructions. For example, the output of one processing element could be configured to alternatively flow to multiple alternative (or redundant) destination processing elements coupled to the processing element (e.g., based on the result of the processing element's execution of its instruction(s)). In some examples, the output of the processing element could be recirculated backwards (to the same processing element or to another processing element which was involved in an earlier stage of a pipeline) or advance ahead to effectively skip one or more stages in a pipeline, among other examples.

The configurability of the interconnection of processing elements may enable the processing elements (e.g., cores) to not only be configured to implement respective types of processors (e.g., TPUs, GPUs, CPUs, hardware accelerators, etc.), but also to implement specific processing pipelines and data flows between these processors in a manner that can be leveraged to implement or accelerate a particular application, thread, or workload. As an example, a neural network or other machine learning or AI model may be implemented utilizing a respective configuration definition to optimize the processing elements' configurations and the on-chip network's configuration to the structures and data/instruction flows of the model. For instance, in the example of a neural network application, a corresponding configuration definition may cause incoming data to be fed through one set of FIFOs, while weight data is fed through other data FIFOs, and corresponding instructions are fed through instruction FIFOs allowing, potentially, for each processing unit to receive some incoming data, weights, and an instruction within a single cycle. Further, outputs of the processing units may be fed (based on a static or dynamic network configuration) to next stages of configured processing units for processing. Parallelizing the delivery of data and instructions through multiple FIFO interfaces may enable impressive processing bandwidth. As an example, a 128 core processor device, running at 5 GHz and 8 instruction FIFOs and 8 data, FIFOs per core could potentially execute 40,960,000,000,000 operations per second (or potentially ~41 tera-ops per server chip). In processor devices with even larger numbers of cores, more instruction FIFOs per core, or processing speed could allow such architectures to realize peta-op-level performance per server chip, among other example implementations and advantages another segment of the processing elements.

As introduced above, a configuration definition for a software-configurable processor device may define how the output of one core (or one core's individual processing elements) may populate the JIT FIFOs of other cores coupled to the core (e.g., within a single processor device or chiplet). Directly populating the instruction and/or data FIFOs may greatly reduce the power and latency costs associated with data movement in traditional processor devices, as both data and instructions may be configured to arrive at a single core or ALU in the same clock cycle to be fed efficiently throughout the execution of a workload. For instance, data output by one core may populate one or more other core's cache structure(s) (e.g., configured as either an L1 cache or JIT FIFO based on a configuration definition), so that it may be processed with low latency and low power. Further, an instruction, once completed, may be used to populate one or more instructions in another core's cache structure(s). Instructions and routing configurations or dependencies may also be output from one core to another to implement a particular processor accelerator topology, among other example uses.

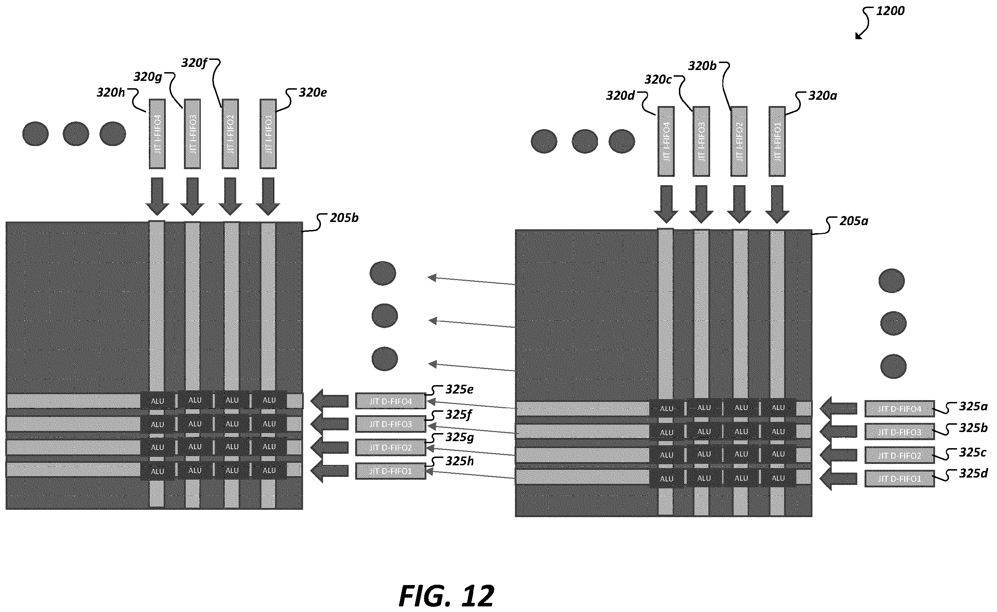

Turning to FIG. 12, a simplified block diagram 1200 is shown of one core (e.g., 205a) with a set of interconnected execution units implementing one or more instruction and/or data pipelines corresponding to respective data FIFOs (e.g., 325a-d) and instruction FIFOs (e.g., 320a-d) feeding the pipelines. Outputs from the execution of the one or more instructions may be passed directly from one core 205a to one or more other cores (e.g., 205b), where the on-chip fabric allows one core to write output data from the execution of its instructions to the data FIFOs (e.g., 325e-h) of the other core. In some implementations, multiple outputs may be generated from multiple concurrent pipelines on the core (e.g., 205a or 205b) and these multiple outputs may be fed (e.g., synchronized and in parallel) to multiple data FIFOs (e.g., 325e-h) provided on the same or multiple different cores (e.g., 205b). Similarly, outputs of instruction pipelines may be fed to one or more instruction FIFOs (e.g., 320e-h) of another core (e.g., 205b), among other examples.

Depending on the scope of configurable elements of a given core, one core (e.g., utilizing configurable execution units and configurable data flow paths between its execution units) may be configurable to implement a particular accelerator block utilizing a single core. In other instances, the desired hardware acceleration component may be implemented by configured multiple interconnect cores utilizing a single configuration definition. As an example, a hardware implementation of a neural network (or portion of a neural network (such as one or more layers)) may be implemented through configuration of one or more cores of a software configurable processor device, where the outputs of one or more execution units (e.g., ALUs) are configured to be coupled to inputs of one or more other execution units, for instance, to implement multiple accumulate (MAC) blocks, where a first execution unit is configured to perform a multiply and pass its output to a next execution unit configured to receive the output and perform an addition or accumulate. Cores may be configured to scale the MAC compute accelerators by multiplying at a first level of cores or execution units (e.g., 2, 3, 4, cores, etc.) and accumulating the output(s) at a second level of cores or execution units.

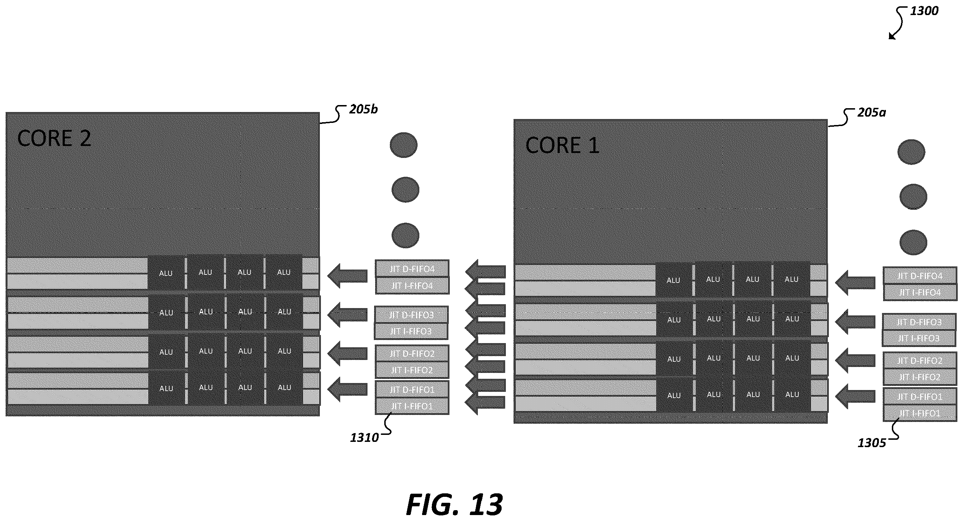

Further, as shown in the example of FIG. 13, a simplified block diagram 1300 shows that, in other configurations, cores (e.g., 205a) may pass data and instruction outputs to FIFO interfaces of another core (e.g., 205b). For instance, as discussed earlier herein, a core and its FIFOs may be configured (through a corresponding configuration definition) to explicitly associate instruction FIFOs with a corresponding data FIFO to form FIFO pairs (e.g., 1305). These FIFO pairs may be extended beyond core 205a to a neighboring core (e.g., 205b) to which the core 205a may send its outputs. For instance, data and instructions may be sent together from the output of core 205a to FIFOs (or a FIFO pair (e.g., 1310)) of core 205b. These instructions could be the same instructions or preprogrammed instructions that are created or selected (e.g., from a register) based on the results of the instructions executed by core 205a. Indeed, in some implementations, data and instructions may be sent from core 205a, based on its outputs, to multiple cores, including back, recursively, to its own input FIFOs, among other examples. These and other data movements using JIT FIFOs, such as discussed herein, can realize significant latency and power savings. For instance, for a traditional core to pass data to another core through traditional cache may require the data to be moved to another cache which can take tens or hundreds of processor cycles, including the execution and message passing required between the sending and receiving processors. However with a direct path to neighboring cores/JIT FIFOs, the data (and instructions) can be directly moved, in some cases, in a single clock cycle, resulting in quicker and more efficient (e.g., with less power consumption) than in traditional computing architectures, among other example benefits.

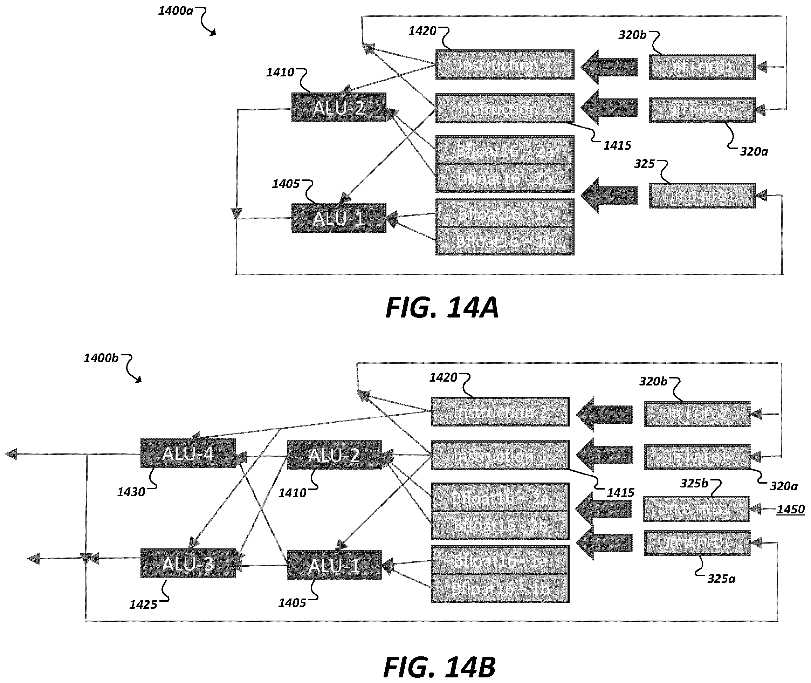

Turning to FIGS. 14A-14B, simplified block diagrams 1400a-b are shown illustrating examples of how one or more stages implemented by one or more processing elements (e.g., cores, execution units, ALUs, etc.) may be fed back, or looped-back, into its own associated cache FIFO structure to be reprocessed. Accordingly, instructions and/or data used in previous stages may be reloaded into a cache FIFO structure to be re-executed (e.g., in a modified or unmodified form) for reprocessing. Such recurrent data paths or feedback loops may be utilized to implement recirculation in various algorithms and processing architectures (e.g., accelerators to implement aspects of recurrent neural networks (RNNs), long-short-term memory (LSTM) networks, gated recurrent units (GRUs), spiking neural networks (SNNs), loopy neural networks, and other machine learning models), while reducing overall data movement and resulting lower latency and lower power consumption, among other example benefits. For instance, configuring a core to implement a loopback from its output to its input FIFO may be used to implement accelerator processor types, such as accelerators for use in implementing Recurring Neural Networks (RNN) or similar neural networks that loop back data and possibly even instructions, among other example use cases.

In the example of FIG. 14A, instructions are executed by respective processing elements (e.g., execution units with the same core or separate cores) and the same instructions are looped back into the instruction FIFOs (e.g., 320a-b) for re-execution in a subsequent cycle. Similarly, in this example, data output by one (or both) of the processing elements (e.g., 1405, 1410) may also be looped back (e.g., transformed through the execution of the instructions 1415, 1420) and provided again to the processing elements (e.g., 1405, 1410) to be operated upon during the next execution of the instructions 1415, 1420 (which may be executed in their original or in a modified form, based on the previous iteration of the instruction's execution). Results of the execution of the instructions may also be used to terminate the recurrent execution of the instructions. For instance, based on the results of the execution of one or both of the instructions, an alternative path may be configured to direct data and/or instructions to another FIFO (e.g., of another core) allowing instruction FIFOs (e.g., 320a-b) and/or data FIFOs (e.g., 325) to be populated by a new instruction, among other examples.

As an illustrative example, an instruction executed at one core could be replicated back to its own JIT FIFO(s) or the instruction could point to another (or next) instruction to be executed at another core to be looped back to the core's own JIT FIFO for another round of processing. As an example, in a core configured to accelerate multiple-accumulate (MAC) operations, a single bit of an output may be used to identify whether a next instruction performs an add or a multiple (e.g., 1 = add; 0 = multiply). In this case, the output could send a 0 (or add) for creating the instruction for the input JIT FIFOs, or a 1 (or multiply) for the next ALUs. This would result in an add followed by a multiply. The reverse could be done for multiply-accumulate, where the first stage does the multiply and the second stage does the accumulate (addition), among other examples. In some examples, the identification of a next instruction (e.g., through a 0 or 1 bit) may indicate a path for the output, where the identification points to a memory (e.g., in L2 cache) that has the next instruction to be executed, among other examples and implementations.

Turning to the example of FIG. 14B, in some implementations, a configuration definition may define loopback paths that are asymmetric in that some data and/or instruction FIFOs (e.g., 320a-b, 325a, etc.) are fed by the loopback, while others (e.g., 325b) are fed with new data or instructions 1450 (e.g., from a register, cache, another core's output, or another source). In the particular example illustrated in FIG. 14B, there are two levels of processing are configured (e.g., using processing elements 1405, 1425 and processing elements 1410, 1430), with one of the data FIFOs (e.g., 325b) allowing fresh incoming data, while another data FIFO (e.g., 325a) is provided with looped back data. In this example, instructions fed to instructions FIFOs 320a-b are also looped back to implement a processor configuration where the new data entered to FIFO 325b is used with the output of the previous processing stage.

In some implementations, looped-back instructions may be modified (e.g., based on the results of the previous iteration of execution) before being returned to the JIT FIFOs (e.g., 320a-b). For example, the instruction could be to loopback the data and instructions for seven iterations, where after the seventh iteration the instruction is modified to force the loopback to end (e.g., and each looped-back instruction is modified to encode a counter value to indicate the number of loopbacks remaining (e.g., reducing the counter by 1 each time the instruction completes)). Hence every time through the recirculation the number in the instruction would be reduced by 1.

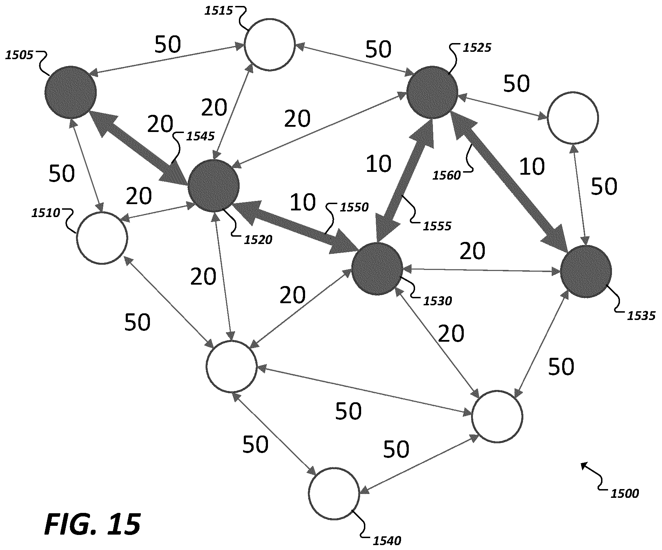

A variety of processor designs may be configured utilizing the principles discussed above to realize hardware processing resources adapted to specific applications, threads, or models. For instance, configuration definitions may mix and match loopback with outputs to other cores, with data and/or instructions being looped-back, modified or unmodified, depending on the implementation, among other example features. As one example, turning to the simplified block diagram 1500 of FIG. 15 shows an example model of a portion of a quantum computing problem or model of a quantum computing emulation. In one example, a configuration definition may be developed and applied to an improved processor device and take advantage of the configurable JIT FIFO data and instruction structures and configurable on-chip fabric to configure cores of the processor device to implement a quantum computing emulation accelerator to emulate one or more quantum computing models. For instance, through the configuration of on-chip interconnect and JIT FIFOs on a collection of processor cores, a quantum computing network 1500 may be emulated through defining data and instruction passing in numerous different directions and paths, allowing the interconnected cores to mimic operations of a quantum computer. For instance, a configuration definition may apply recirculation, processing element interconnects, and other techniques to mimic a quantum computing model with multiple paths and recurrent paths. For instance, cores and/or execution units may be configured to implement respective nodes (e.g., 1505, 1510, 1515, 1520, 1525, 1530, 1535, 1540, etc.) in the quantum network, with interconnect meshes (e.g., interconnecting cores or execution units within a core) configured to implement paths (e.g., 1545, 1550, 1555, 1560, etc.) between nodes in the network, among other example implementations. Accordingly, the configured network of cores on the processor device may better emulate interactions between quantum computing elements and make the development of quantum computing algorithms and applications more efficient and accessible. Currently, quantum computing systems are in their infancy and are inaccessible to most developers. A more efficient and accessible quantum computing emulation accelerator implemented through the software configuration of the processor device may allow more quantum computing elements to be emulated and allow more quantum computing paths to be verified, thereby enabling the development and verification of a wider array of quantum computing algorithms, while industry waits on the development of more stable and commercially viable quantum computing systems, among other example benefits.

It should be appreciated that the examples provided herein are solely for the purpose of illustrating the applicability of more generally applicable principles, hardware implementations, and systems. Based on the number of cores and configurability of the cores' cache storage elements and the interconnect fabric interconnecting the cores (and/or individual execution units within the cores) designer may have potentially unlimited potential in developing new and varied configuration definitions to configure a corresponding processor device to emulate or perform as a combination of various processor types, as opposed to a collection of general purpose processor cores. Data centers, cloud service providers, and other servers may provide interfaces to allow customers to apply their configuration definitions to processor devices provided by the data center, which may enhance the services and configurability offered by the data center provider. Further, application developers may leverage such configuration definitions to develop software that is optimized to be executed on the configured processor device, thereby realizing improved performance in their applications, as well as new applications and services which may be enabled through such processor resources, among other example use cases.

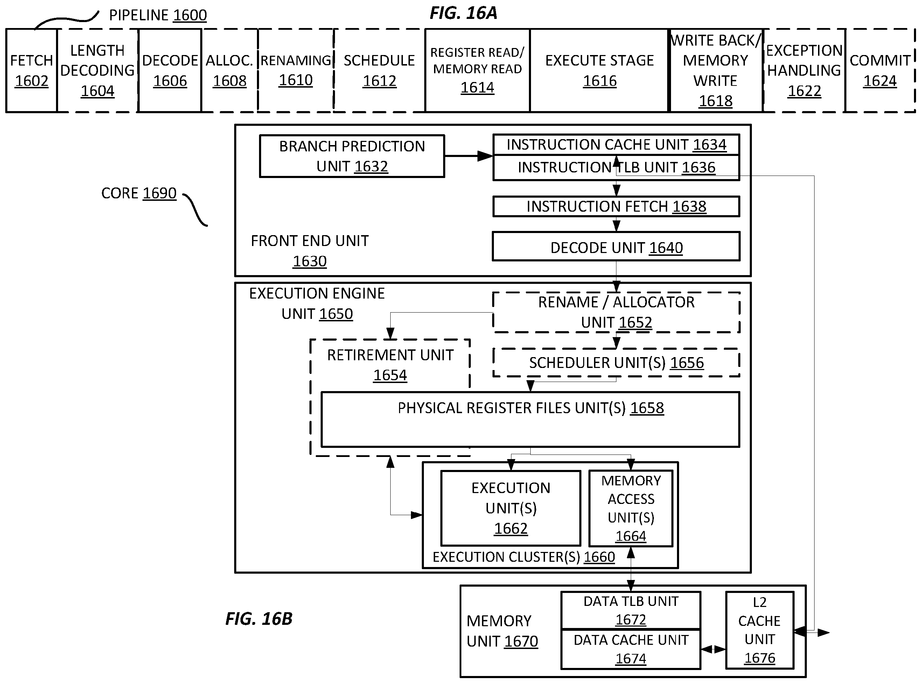

FIGS. 16A-23 detail exemplary architectures and systems to implement embodiments of the above (such as the processors utilized in the neuromorphic computing device implementing the example SNNs described above). In some embodiments, one or more hardware components and/or instructions described above are emulated as detailed below, or implemented as software modules. Indeed, embodiments of the instruction(s) detailed above are embodied may be embodied in a "generic vector friendly instruction format" which is detailed below. In other embodiments, such a format is not utilized and another instruction format is used, however, the description below of the writemask registers, various data transformations (swizzle, broadcast, etc.), addressing, etc. is generally applicable to the description of the embodiments of the instruction(s) above. Additionally, exemplary systems, architectures, and pipelines are detailed below. Embodiments of the instruction(s) above may be executed on such systems, architectures, and pipelines, but are not limited to those detailed.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

FIG. 16A is a block diagram illustrating both an exemplary in-order pipeline and an exemplary register renaming, out-of-order issue/execution pipeline according to embodiments of the solution. FIG. 16B is a block diagram illustrating both an exemplary embodiment of an in-order architecture core and an exemplary register renaming, out-of-order issue/execution architecture core to be included in a processor according to embodiments of the solution. The solid lined boxes in FIGS. 16A-16B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 16A, a processor pipeline 1600 includes a fetch stage 1602, a length decode stage 1604, a decode stage 1606, an allocation stage 1608, a renaming stage 1610, a scheduling (also known as a dispatch or issue) stage 1612, a register read/memory read stage 1614, an execute stage 1616, a write back/memory write stage 1618, an exception handling stage 1622, and a commit stage 1624.

FIG. 16B shows processor core 1690 including a front end unit 1630 coupled to an execution engine unit 1650, and both are coupled to a memory unit 1670. The core 1690 may be a reduced instruction set computing (RISC) core (e.g., RISC-V), a complex instruction set computing (CISC) core, a very long instruction word (VLIW) core, or a hybrid or alternative core type. As yet another option, the core 1690 may be a special-purpose core, such as, for example, a network or communication core, compression engine, coprocessor core, general purpose computing graphics processing unit (GPGPU) core, graphics core, or the like.

The front end unit 1630 includes a branch prediction unit 1632 coupled to an instruction cache unit 1634, which is coupled to an instruction translation lookaside buffer (TLB) 1636, which is coupled to an instruction fetch unit 1638, which is coupled to a decode unit 1640. The decode unit 1640 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1640 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1690 includes a microcode ROM or other medium that stores microcode for certain macroinstructions (e.g., in decode unit 1640 or otherwise within the front end unit 1630). The decode unit 1640 is coupled to a rename/allocator unit 1652 in the execution engine unit 1650.

The execution engine unit 1650 includes the rename/allocator unit 1652 coupled to a retirement unit 1654 and a set of one or more scheduler unit(s) 1656. The scheduler unit(s) 1656 represents any number of different schedulers, including reservations stations, central instruction window, etc. The scheduler unit(s) 1656 is coupled to the physical register file(s) unit(s) 1658. Each of the physical register file(s) units 1658 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1658 comprises a vector registers unit, a write mask registers unit, and a scalar registers unit. These register units may provide architectural vector registers, vector mask registers, and general purpose registers. The physical register file(s) unit(s) 1658 is overlapped by the retirement unit 1654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1654 and the physical register file(s) unit(s) 1658 are coupled to the execution cluster(s) 1660. The execution cluster(s) 1660 includes a set of one or more execution units 1662 and a set of one or more memory access units 1664. The execution units 1662 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that perform all functions. The scheduler unit(s) 1656, physical register file(s) unit(s) 1658, and execution cluster(s) 1660 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1664). It should also be understood that where separate pipelines are used, one or more of these pipelines may be out-of-order issue/execution and the rest in-order.

The set of memory access units 1664 is coupled to the memory unit 1670, which includes a data TLB unit 1672 coupled to a data cache unit 1674 coupled to a level 2 (L2) cache unit 1676. In one exemplary embodiment, the memory access units 1664 may include a load unit, a store address unit, and a store data unit, each of which is coupled to the data TLB unit 1672 in the memory unit 1670. The instruction cache unit 1634 is further coupled to a level 2 (L2) cache unit 1676 in the memory unit 1670. The L2 cache unit 1676 is coupled to one or more other levels of cache and eventually to a main memory.

By way of example, the exemplary register renaming, out-of-order issue/execution core architecture may implement the pipeline 1600 as follows: 1) the instruction fetch 1638 performs the fetch and length decoding stages 1602 and 1604; 2) the decode unit 1640 performs the decode stage 1606; 3) the rename/allocator unit 1652 performs the allocation stage 1608 and renaming stage 1610; 4) the scheduler unit(s) 1656 performs the schedule stage 1612; 5) the physical register file(s) unit(s) 1658 and the memory unit 1670 perform the register read/memory read stage 1614; the execution cluster 1660 perform the execute stage 1616; 6) the memory unit 1670 and the physical register file(s) unit(s) 1658 perform the write back/memory write stage 1618; 7) various units may be involved in the exception handling stage 1622; and 8) the retirement unit 1654 and the physical register file(s) unit(s) 1658 perform the commit stage 1624.

The core 1690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1690 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units (e.g., 1634, 1674, etc.) and a shared L2 cache unit 1676, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

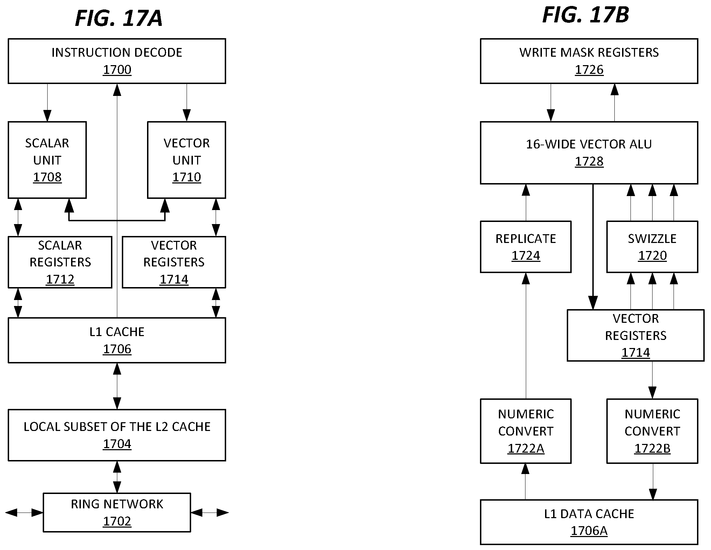

FIGS. 17A-17B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 17A is a block diagram of a single processor core, along with its connection to the on-die interconnect network 1702 and with its local subset of the Level 2 (L2) cache 1704, according to embodiments of the solution. In one embodiment, an instruction decoder 1700 supports the x86 instruction set with a packed data instruction set extension. An L1 cache 1706 allows low-latency accesses to cache memory into the scalar and vector units. While in one embodiment (to simplify the design), a scalar unit 1708 and a vector unit 1710 use separate register sets (respectively, scalar registers 1712 and vector registers 1714) and data transferred between them is written to memory and then read back in from a level 1 (L1) cache 1706, alternative embodiments of the solution may use a different approach (e.g., use a single register set or include a communication path that allow data to be transferred between the two register files without being written and read back).

The local subset of the L2 cache 1704 is part of a global L2 cache that is divided into separate local subsets, one per processor core. Each processor core has a direct access path to its own local subset of the L2 cache 1704. Data read by a processor core is stored in its L2 cache subset 1704 and can be accessed quickly, in parallel with other processor cores accessing their own local L2 cache subsets. Data written by a processor core is stored in its own L2 cache subset 1704 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 17B is an expanded view of part of the processor core in FIG. 17A according to embodiments of the solution. FIG. 17B includes an L1 data cache 1706A part of the L1 cache 1704, as well as more detail regarding the vector unit 1710 and the vector registers 1714. Specifically, the vector unit 1710 is a 16-wide vector processing unit (VPU) (see the 16-wide ALU 1728), which executes one or more integer, single-precision float, and double-precision float instructions. The VPU supports swizzling the register inputs with swizzle unit 1720, numeric conversion with numeric convert units 1722A-B, and replication with replication unit 1724 on the memory input. Write mask registers 1726 allow predicating resulting vector writes.

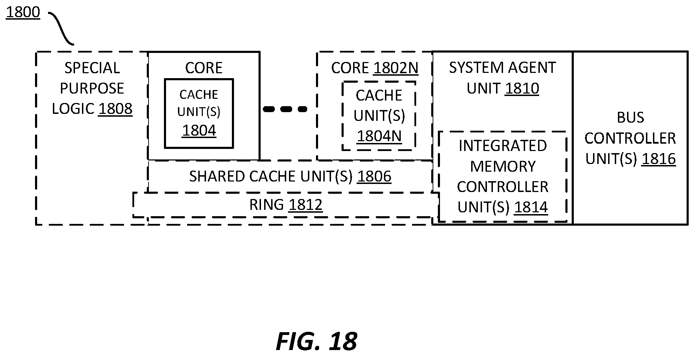

FIG. 18 is a block diagram of a processor 1800 that may have more than one core, may have an integrated memory controller, and may have integrated graphics according to embodiments of the solution. The solid lined boxes in FIG. 18 illustrate a processor 1800 with a single core 1802A, a system agent 1810, a set of one or more bus controller units 1816, while the optional addition of the dashed lined boxes illustrates an alternative processor 1800 with multiple cores 1802A-N, a set of one or more integrated memory controller unit(s) 1814 in the system agent unit 1810, and special purpose logic 1808. In some implementations, the interconnect may be implemented as bypass rings or other cache layers to implement direct core-to-core traffic, such as to implement a configurable processor device, such as discussed above.

Thus, different implementations of the processor 1800 may include: 1) a CPU with the special purpose logic 1808 being integrated graphics and/or scientific (throughput) logic (which may include one or more cores), and the cores 1802A-N being one or more general purpose cores (e.g., general purpose in-order cores, general purpose out-of-order cores, a combination of the two); 2) a coprocessor with the cores 1802A-N being a large number of special purpose cores intended primarily for graphics and/or scientific (throughput); and 3) a coprocessor with the cores 1802A-N being a large number of general purpose in-order cores. Thus, the processor 1800 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1800 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1806, and external memory (not shown) coupled to the set of integrated memory controller units 1814. The set of shared cache units 1806 may include one or more mid-level caches, such as level 2 (L2), level 3 (L3), level 4 (L4), or other levels of cache, a last level cache (LLC), and/or combinations thereof. While in one embodiment a ring based interconnect unit 1812 interconnects the integrated graphics logic 1808, the set of shared cache units 1806, and the system agent unit 1810/integrated memory controller unit(s) 1814, alternative embodiments may use any number of well-known techniques for interconnecting such units. In one embodiment, coherency is maintained between one or more cache units 1806 and cores 1802A-N.

In some embodiments, one or more of the cores 1802A-N are capable of multithreading. The system agent 1810 includes those components coordinating and operating cores 1802A-N. The system agent unit 1810 may include for example a power control unit (PCU) and a display unit. The PCU may be or include logic and components needed for regulating the power state of the cores 1802A-N and the integrated graphics logic 1808. The display unit is for driving one or more externally connected displays.

The cores 1802A-N may be homogenous or heterogeneous in terms of architecture instruction set; that is, two or more of the cores 1802A-N may be capable of execution the same instruction set, while others may be capable of executing only a subset of that instruction set or a different instruction set.

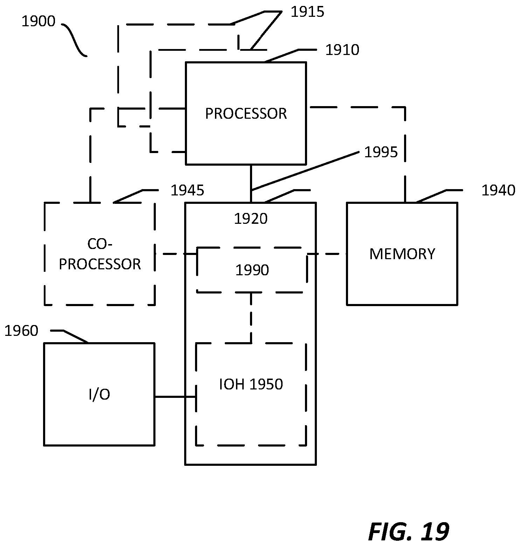

FIGS. 19-23 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

Referring now to FIG. 19, shown is a block diagram of a system 1900 in accordance with one embodiment of the present disclosure. The system 1900 may include one or more processors 1910, 1915, which are coupled to a controller hub 1920. In one embodiment the controller hub 1920 includes a graphics memory controller hub (GMCH) 1990 and an Input/Output Hub (IOH) 1950 (which may be on separate chips); the GMCH 1990 includes memory and graphics controllers to which are coupled memory 1940 and a coprocessor 1945; the IOH 1950 couples input/output (I/O) devices 1960 to the GMCH 1990. Alternatively, one or both of the memory and graphics controllers are integrated within the processor (as described herein), the memory 1940 and the coprocessor 1945 are coupled directly to the processor 1910, and the controller hub 1920 in a single chip with the IOH 1950.

The optional nature of additional processors 1915 is denoted in FIG. 19 with broken lines. Each processor 1910, 1915 may include one or more of the configurable processing cores described herein and may be some version of the configurable processor device discussed herein.

The memory 1940 may be, for example, dynamic random access memory (DRAM), phase change memory (PCM), or a combination of the two. For at least one embodiment, the controller hub 1920 communicates with the processor(s) 1910, 1915 via a multi-drop bus, such as a frontside bus (FSB), point-to-point interface such as QuickPath Interconnect (QPI), UltraPath Interconnect (UPI), or similar connection 1995.

In one embodiment, the coprocessor 1945 is a special-purpose processor, such as, for example, a high-throughput MIC processor, a network or communication processor, compression engine, graphics processor, GPGPU, embedded processor, or the like. In one embodiment, controller hub 1920 may include an integrated graphics accelerator.

There can be a variety of differences between the physical resources 1910, 1915 in terms of a spectrum of metrics of merit including architectural, microarchitectural, thermal, power consumption characteristics, and the like.

In one embodiment, the processor 1910 executes instructions that control data processing operations of a general type. Embedded within the instructions may be coprocessor instructions. The processor 1910 recognizes these coprocessor instructions as being of a type that should be executed by the attached coprocessor 1945. Accordingly, the processor 1910 issues these coprocessor instructions (or control signals representing coprocessor instructions) on a coprocessor bus or other interconnect, to coprocessor 1945. Coprocessor(s) 1945 accept and execute the received coprocessor instructions. In some implementations, the processor 1910 and coprocessor(s) 1945 may be communicatively coupled and configurable through the sharing of the same interconnect fabric, cache structures, etc.

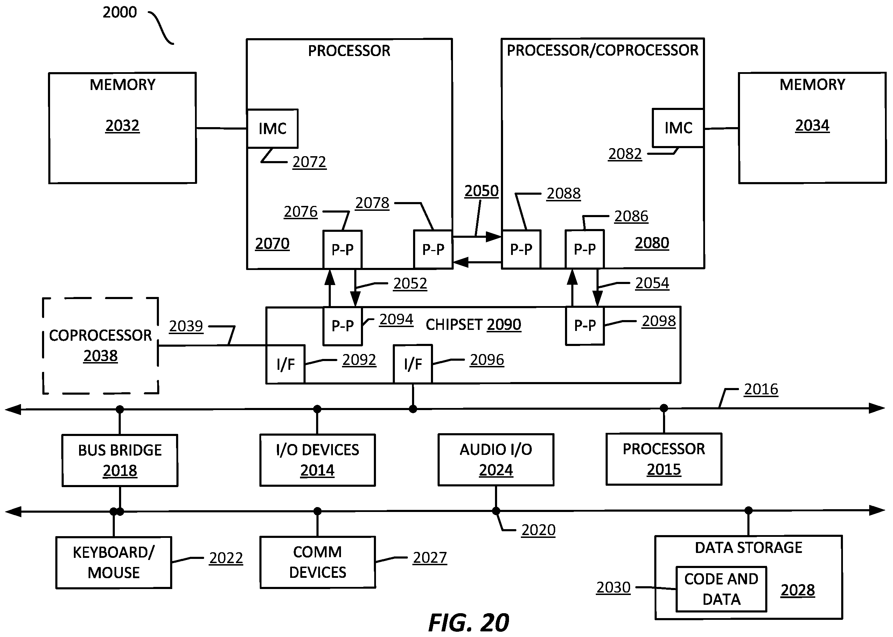

Referring now to FIG. 20, shown is a block diagram of a first more specific exemplary system 2000 in accordance with an embodiment of the present disclosure. As shown in FIG. 20, multiprocessor system 2000 is a point-to-point interconnect system, and includes a first processor 2070 and a second processor 2080 coupled via a point-to-point interconnect 2050. Each of processors 2070 and 2080 may be some version of the processor 1800. In one embodiment of the solution, processors 2070 and 2080 are respectively processors 1910 and 1915, while coprocessor 2038 is coprocessor 1945. In another embodiment, processors 2070 and 2080 are respectively processor 1910 coprocessor 1945.

Processors 2070 and 2080 are shown including integrated memory controller (IMC) units 2072 and 2082, respectively. Processor 2070 also includes as part of its bus controller units point-to-point (P-P) interfaces 2076 and 2078; similarly, second processor 2080 includes P-P interfaces 2086 and 2088. Processors 2070, 2080 may exchange information via a point-to-point (P-P) interface 2050 using P-P interface circuits 2078, 2088. As shown in FIG. 20, IMCs 2072 and 2082 couple the processors to respective memories, namely a memory 2032 and a memory 2034, which may be portions of main memory locally attached to the respective processors.

Processors 2070, 2080 may each exchange information with a chipset 2090 via individual P-P interfaces 2052, 2054 using point to point interface circuits 2076, 2094, 2086, 2098. Chipset 2090 may optionally exchange information with the coprocessor 2038 via a high-performance interface 2039. In one embodiment, the coprocessor 2038 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2090 may be coupled to a first bus 2016 via an interface 2096. In one embodiment, first bus 2016 may be a Peripheral Component Interconnect (PCI) bus, or a bus such as a PCI Express bus or another third generation I/O interconnect bus, although the scope of the present disclosure is not so limited.

As shown in FIG. 20, various I/O devices 2014 may be coupled to first bus 2016, along with a bus bridge 2018 which couples first bus 2016 to a second bus 2020. In one embodiment, one or more additional processor(s) 2015, such as coprocessors, high-throughput MIC processors, GPGPU's, accelerators (such as, e.g., graphics accelerators or digital signal processing (DSP) units), field programmable gate arrays, or any other processor, are coupled to first bus 2016. In one embodiment, second bus 2020 may be a low pin count (LPC) bus. Various devices may be coupled to a second bus 2020 including, for example, a keyboard and/or mouse 2022, communication devices 2027 and a storage unit 2028 such as a disk drive or other mass storage device which may include instructions/code and data 2030, in one embodiment. Further, an audio I/O 2024 may be coupled to the second bus 2020. Note that other architectures are possible. For example, instead of the point-to-point architecture of FIG. 20, a system may implement a multi-drop bus or other such architecture.

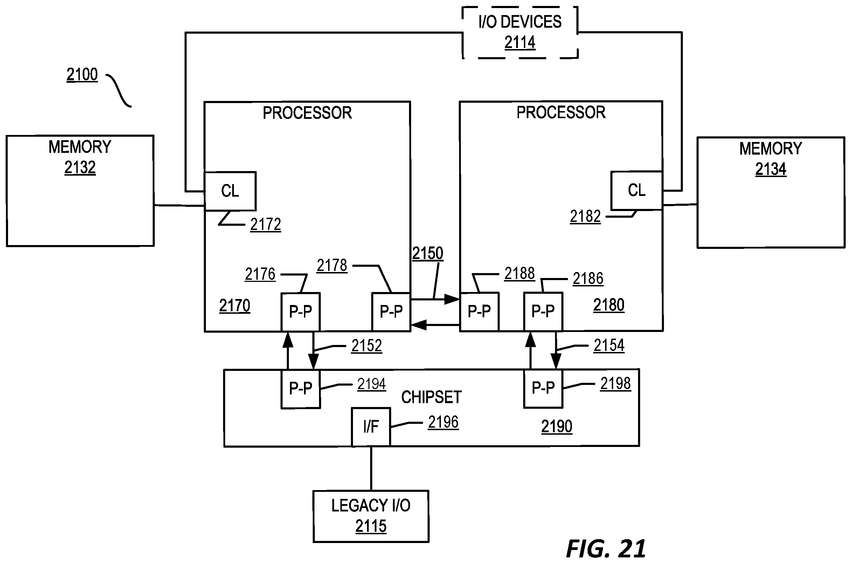

Referring now to FIG. 21, shown is a block diagram of a second more specific exemplary system 2100 in accordance with an embodiment of the present disclosure. For instance, FIG. 21 illustrates that the processors 2170, 2180 may include integrated memory and I/O control logic ("CL") 2172 and 2182, respectively. Thus, the CL 2172, 2182 include integrated memory controller units and include I/O control logic. FIG. 21 illustrates that not only are the memories 2132, 2134 coupled to the CL 2172, 2182, but also that I/O devices 2114 are also coupled to the control logic 2172, 2182. Legacy I/O devices 2115 are coupled to the chipset 2190.

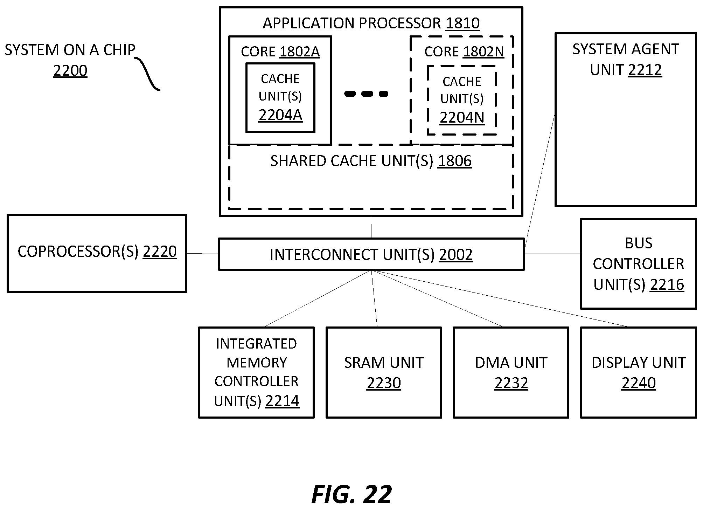

Referring now to FIG. 22, shown is a block diagram of a SoC 2200 in accordance with an embodiment of the present disclosure. Also, dashed lined boxes are optional features on more advanced SoCs. In FIG. 22, an interconnect unit(s) 2202 is coupled to: an application processor 2210 which includes a set of one or more cores 2220A-N and shared cache unit(s) 2206; a system agent unit 2212; a bus controller unit(s) 2216; an integrated memory controller unit(s) 2214; a set or one or more coprocessors 2220 which may include integrated graphics logic, an image processor, an audio processor, and a video processor; an static random access memory (SRAM) unit 2230; a direct memory access (DMA) unit 2232; and a display unit 2240 for coupling to one or more external displays. In one embodiment, the coprocessor(s) 2220 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the solution may be implemented as computer programs or program code executing on programmable systems comprising at least one processor, a storage system (including volatile and non-volatile memory and/or storage elements), at least one input device, and at least one output device.

Program code, such as code 2230 illustrated in FIG. 22, may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

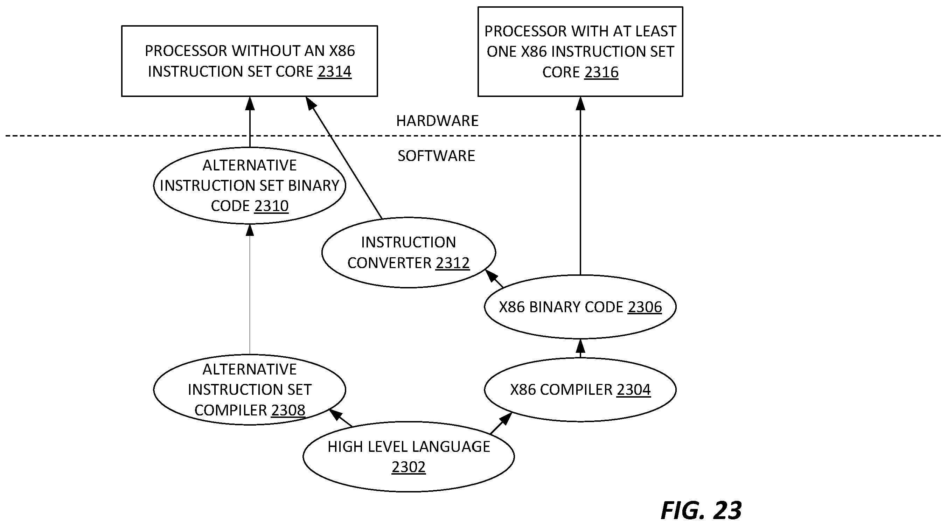

FIG. 23 is a block diagram contrasting the use of a software instruction converter to convert binary instructions in a source instruction set to binary instructions in a target instruction set according to embodiments of the solution. In the illustrated embodiment, the instruction converter is a software instruction converter, although alternatively the instruction converter may be implemented in software, firmware, hardware, or various combinations thereof. FIG. 23 shows a program in a high level language 2302 may be compiled using an x86 compiler 2304 to generate x86 binary code 2306 that may be natively executed by a processor with at least one x86 instruction set core 2316. The processor with at least one x86 instruction set core 2316 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2304 represents a compiler that is operable to generate x86 binary code 2306 (e.g., object code) that can, with or without additional linkage processing, be executed on the processor with at least one x86 instruction set core 2316. Similarly, FIG. 23 shows the program in the high level language 2302 may be compiled using an alternative instruction set compiler 2308 to generate alternative instruction set binary code 2310 that may be natively executed by a processor without at least one x86 instruction set core 2314 (e.g., a processor with cores that execute the MIPS instruction set of MIPS Technologies of Sunnyvale, CA and/or that execute the ARM instruction set of ARM Holdings of Sunnyvale, CA). The instruction converter 2312 is used to convert the x86 binary code 2306 into code that may be natively executed by the processor without an x86 instruction set core 2314. This converted code is not likely to be the same as the alternative instruction set binary code 2310 because an instruction converter capable of this is difficult to make; however, the converted code will accomplish the general operation and be made up of instructions from the alternative instruction set. Thus, the instruction converter 2312 represents software, firmware, hardware, or a combination thereof that, through emulation, simulation or any other process, allows a processor or other electronic device that does not have an x86 instruction set processor or core to execute the x86 binary code 2306.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the solution also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Additionally, other user interface layouts and functionality can be supported. Other variations are within the scope of the following claims.

While this specification contains many specific implementation details, these should not be construed as limitations on the scope of any solutions or of what may be claimed, but rather as descriptions of features specific to particular embodiments of particular solutions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The following examples pertain to embodiments in accordance with this Specification. Example 1 is an apparatus including: a plurality of processor cores; a plurality of storage elements associated with the plurality of processor cores, where the plurality of storage elements are configurable to implement one or more just-in-time (JIT) first-in-first-out (FIFO) queues or level one (L1) cache blocks for respective processor cores in the plurality of processor cores; an interface to receive, from a software-based controller, a configuration definition to define configuration of the plurality of storage elements; and configuration hardware to configure a first storage element in the plurality of storage elements associated with a first processor core in the plurality of processor cores to implement a plurality of JIT FIFO queues in the first storage element for the first processor core based on the configuration definition.

Example 2 includes the subject matter of example 1, where the plurality of JIT FIFO queues are to provide respective information to the first processor core on a same clock cycle.

Example 3 includes the subject matter of any one of examples 1-2, where the plurality of JIT FIFO queues includes one or more instruction FIFO queues and one or more data FIFIO queues based on the configuration definition, the one or more instruction FIFO queues are to provide respective instructions for execution by processing elements of the first processor core, and the one or more data FIFO queues are to provide data to be operated upon by instructions executed by the first processor core.

Example 4 includes the subject matter of example 3, where the configuration hardware is to configure a second storage element in the plurality of storage elements associated with a second processor core in the plurality of processor cores to implement am L1 cache block in the second storage element for the second processor core based on the configuration definition.

Example 5 includes the subject matter of any one of examples 3-4, where the one or more instruction FIFO queues include at least a first instruction FIFO queue and a second instruction FIFO queue, the one or more data FIFO queues include at least a first data FIFO queue and a second data FIFO queue.

Example 6 includes the subject matter of example 5, where the first instruction FIFO queue is associated with the first data FIFO queue to deliver data from the first data FIFO queue for use during execution of instructions provided by the first instruction FIFO queue, and the second instruction FIFO queue is associated with the second data FIFO queue to deliver data from the second data FIFO queue for use during execution of instructions provided by the second instruction FIFO queue, where instructions from the first instruction FIFO queue are to be executed at the first processor core in parallel with instructions from the second instruction FIFO queue.

Example 7 includes the subject matter of any one of examples 1-6, further including a configurable interconnect fabric to interconnect the plurality of processor cores, where the configuration definition defines a configuration of the interconnect fabric.

Example 8 includes the subject matter of example 7, where the configuration of the plurality of storage elements and the interconnect fabric is to implement at least one processor of a first type and at least one processor device of a different second type through the plurality of processor cores.

Example 9 includes the subject matter of example 8, where the first type includes a general purpose processor and the second type includes one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 10 includes the subject matter of any one of examples 8-9, where a default configuration for the plurality of storage elements is to implement respective L1 cache for the plurality of processor cores, and the plurality of processor cores are to implement general purpose processor cores in the default configuration.

Example 11 includes the subject matter of any one of examples 8-10, where the configuration definition includes a first configuration definition for a first operating window, where the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on the second configuration definition, where the second configuration definition defines a different configuration for the plurality of storage elements and the interconnect fabric during the second operating window.

Example 12 includes the subject matter of example 11, where a first user application is to be executed based on the plurality of processors of the first plurality of different types in the first operating window and a different second user application is to be executed based on the plurality of processors of the second plurality of types in the second operating window.

Example 13 includes the subject matter of any one of examples 7-12, where the first processor core is to be coupled to a second processor core in the plurality of processor core based on the configuration of the interconnect fabric to feed an output from the first processor core to a set of JIT FIFO queues configured in a second storage element in the plurality of storage elements associated with the second processor core based on the configuration definition.

Example 14 includes the subject matter of example 13, where the interconnect fabric is configured based on the configuration definition for the first processor core to alternatively feed the output of the first processor core to the set of JIT FIFO queues for the second processor core or FIFO queues of another processor core.

Example 15 includes the subject matter of example 14, where the other processor core includes the first processor core to loopback the output of the first processor core to at least one of the plurality of JIT FIFO queues for the first processor core.

Example 16 includes the subject matter of any one of examples 13-15, where the output includes an instruction to be fed to an instruction FIFO in the set of JIT FIFO queues to be executed by the second processor core.

Example 17 includes the subject matter of any one of examples 13-16, where the output includes data to be operated upon by an instruction executed by the second processor core.

Example 18 is a non-transitory machine readable storage medium with instructions stored thereon, the instructions executable by a machine to cause the machine to: generate a configuration definition for a processor device in a server system, where the processor device includes a plurality of processor cores with associated storage elements, the plurality of processor cores are interconnected by an interconnect fabric on the processor device, and the storage elements are configurable to implement one or more just-in-time (JIT) first-in-first-out (FIFO) queues for a respective one of the plurality of processor cores, where the configuration definition defines a configuration of the storage elements of the plurality of processor cores and a configuration of the interconnect fabric to be applied to cause the plurality of processor cores to implement a plurality of different processor types, where the configuration of the storage elements is to cause at least a storage element of a given processor core in the plurality of processor cores to implement a set of JIT FIFO queues instead of a level one (L1) cache to deliver at least one of instructions or data to the given processor core; and send the configuration definition to the server system to cause the processor device to implement the configuration of the storage elements of the plurality of processor cores and the configuration of the interconnect fabric.

Example 19 includes the subject matter of example 18, where the configuration of the storage elements of the plurality of processor cores and the configuration of the interconnect fabric modifies a default configuration of the processor device, where the plurality of processor cores implement general purpose processor cores in the default configuration, and the plurality of different processor types include at least one specialized hardware accelerator processor type.

Example 20 includes the subject matter of any one of examples 18-19, where the configuration of the interconnect fabric is to implement a loopback from an output of a particular one of the plurality of processor cores to a JIT FIFO queue of the particular processor core.

Example 21 includes the subject matter of any one of examples 18-19, where the configuration of the interconnect fabric is to direct an output of a first one of the plurality of processor cores to a JIT FIFO queue of a second one of the plurality of processor cores.

Example 22 includes the subject matter of example 21, where the configuration of the interconnect fabric is to direct the output of the first processor core to JIT FIFO cores of two or more of the plurality of processor cores.

Example 23 includes the subject matter of example 22, where the output of the first processor core is routed to one of the two or more processor cores based on a result at the first processor core.

Example 24 is a method including: generating a configuration definition for a processor device in a server system, where the processor device includes a plurality of processor cores with associated storage elements, the plurality of processor cores are interconnected by an interconnect fabric on the processor device, and the storage elements are configurable to implement one or more just-in-time (JIT) first-in-first-out (FIFO) queues for a respective one of the plurality of processor cores, where the configuration definition defines a configuration of the storage elements of the plurality of processor cores and a configuration of the interconnect fabric to be applied to cause the plurality of processor cores to implement a plurality of different processor types, where the configuration of the storage elements is to cause at least a storage element of a given processor core in the plurality of processor cores to implement a set of JIT FIFO queues instead of a level one (L1) cache to deliver at least one of instructions or data to the given processor core; and sending the configuration definition to the server system to cause the processor device to implement the configuration of the storage elements of the plurality of processor cores and the configuration of the interconnect fabric.

Example 25 includes the subject matter of example 24, where the configuration of the storage elements of the plurality of processor cores and the configuration of the interconnect fabric modifies a default configuration of the processor device, where the plurality of processor cores implement general purpose processor cores in the default configuration, and the plurality of different processor types include at least one specialized hardware accelerator processor type.

Example 26 includes the subject matter of any one of examples 24-25, where the configuration of the interconnect fabric is to implement a loopback from an output of a particular one of the plurality of processor cores to a JIT FIFO queue of the particular processor core.

Example 27 includes the subject matter of any one of examples 24-25, where the configuration of the interconnect fabric is to direct an output of a first one of the plurality of processor cores to a JIT FIFO queue of a second one of the plurality of processor cores.

Example 28 includes the subject matter of example 27, where the configuration of the interconnect fabric is to direct the output of the first processor core to JIT FIFO cores of two or more of the plurality of processor cores.

Example 29 includes the subject matter of example 28, where the output of the first processor core is routed to one of the two or more processor cores based on a result at the first processor core.

Example 30 is a system including means to perform the method of any one of examples 24-29.

Example 31 is a system including: a server system including: a processor device including: a plurality of processor cores; and a plurality of storage elements associated with the plurality of processor cores, where the plurality of storage elements are configurable to implement one or more just-in-time (JIT) first-in-first-out (FIFO) queues or level one (L1) cache blocks for respective processor cores in the plurality of processor cores; an interface to receive, from a software-based controller, a configuration definition to define configuration of the plurality of storage elements of the plurality of processor cores; and configuration hardware to configure a first storage element in the plurality of storage elements associated with a first processor core in the plurality of processor cores to implement a plurality of JIT FIFO queues in the first storage element for the first processor core based on the configuration definition.

Example 32 includes the subject matter of example 31, further including a software controller to generate the configuration definition and send the configuration definition to the interface.

Example 33 includes the subject matter of any one of examples 31-32, where the configuration hardware is resident on the processor device.

Example 34 includes the subject matter of any one of examples 31-33, where the plurality of JIT FIFO queues are to provide respective information to the first processor core on a same clock cycle.

Example 35 includes the subject matter of any one of examples 31-34, where the plurality of JIT FIFO queues includes one or more instruction FIFO queues and one or more data FIFIO queues based on the configuration definition, the one or more instruction FIFO queues are to provide respective instructions for execution by processing elements of the first processor core, and the one or more data FIFO queues are to provide data to be operated upon by instructions executed by the first processor core.

Example 36 includes the subject matter of example 35, where the configuration hardware is to configure a second storage element in the plurality of storage elements associated with a second processor core in the plurality of processor cores to implement am L1 cache block in the second storage element for the second processor core based on the configuration definition.

Example 37 includes the subject matter of any one of examples 35-36, where the one or more instruction FIFO queues include at least a first instruction FIFO queue and a second instruction FIFO queue, the one or more data FIFO queues include at least a first data FIFO queue and a second data FIFO queue.

Example 38 includes the subject matter of example 37, where the first instruction FIFO queue is associated with the first data FIFO queue to deliver data from the first data FIFO queue for use during execution of instructions provided by the first instruction FIFO queue, and the second instruction FIFO queue is associated with the second data FIFO queue to deliver data from the second data FIFO queue for use during execution of instructions provided by the second instruction FIFO queue, where instructions from the first instruction FIFO queue are to be executed at the first processor core in parallel with instructions from the second instruction FIFO queue.

Example 39 includes the subject matter of any one of examples 31-38, further including a configurable interconnect fabric to interconnect the plurality of processor cores, where the configuration definition defines a configuration of the interconnect fabric.

Example 40 includes the subject matter of example 39, where the configuration of the plurality of storage elements and the interconnect fabric is to implement at least one processor of a first type and at least one processor device of a different second type through the plurality of processor cores.

Example 41 includes the subject matter of example 40, where the first type includes a general purpose processor and the second type includes one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 42 includes the subject matter of any one of examples 40-41, where a default configuration for the plurality of storage elements is to implement respective L1 cache for the plurality of processor cores, and the plurality of processor cores are to implement general purpose processor cores in the default configuration.

Example 43 includes the subject matter of any one of examples 40-42, where the configuration definition includes a first configuration definition for a first operating window, where the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on the second configuration definition, where the second configuration definition defines a different configuration for the plurality of storage elements and the interconnect fabric during the second operating window.

Example 44 includes the subject matter of example 43, where a first user application is to be executed based on the plurality of processors of the first plurality of different types in the first operating window and a different second user application is to be executed based on the plurality of processors of the second plurality of types in the second operating window.

Example 45 includes the subject matter of any one of examples 39-44, where the first processor core is to be coupled to a second processor core in the plurality of processor core based on the configuration of the interconnect fabric to feed an output from the first processor core to a set of JIT FIFO queues configured in a second storage element in the plurality of storage elements associated with the second processor core based on the configuration definition.

Example 46 includes the subject matter of example 45, where the interconnect fabric is configured based on the configuration definition for the first processor core to alternatively feed the output of the first processor core to the set of JIT FIFO queues for the second processor core or FIFO queues of another processor core.

Example 47 includes the subject matter of example 46, where the other processor core includes the first processor core to loopback the output of the first processor core to at least one of the plurality of JIT FIFO queues for the first processor core.

Example 48 includes the subject matter of any one of examples 45-47, where the output includes an instruction to be fed to an instruction FIFO in the set of JIT FIFO queues to be executed by the second processor core.

Example 49 includes the subject matter of any one of examples 45-48, where the output includes data to be operated upon by an instruction executed by the second processor core.

Example 50 is an apparatus including: a plurality of processor cores; a plurality of configurable storage elements associated with the plurality of processor cores, where storage elements in the plurality of storage elements are respectively configurable to alternatively implement one of a first-in-first-out (FIFO) queue or a level one (L1) cache for a corresponding associated processor core in the plurality of processor cores; and a configuration controller to: identify a software-defined configuration definition, where the configuration definition defines configurations for the processor cores in the plurality of processor cores; and configure a first storage element in the plurality of storage elements associated with a first processor core in the plurality of processor cores to implement a set of FIFO queues in the first storage element for the first processor core based on the configuration definition.

Example 51 includes the subject matter of example 50, where the set of FIFO queues includes a plurality of FIFO queues.

Example 52 includes the subject matter of example 51, where the plurality of FIFO queues includes a plurality of data FIFO queues and a plurality of instruction FIFO queues, a first instruction FIFO queue in the plurality of instruction FIFO queues is to provide a first instruction for execution by execution units of the first processor core, and a first data FIFO queue in the plurality of data FIFO queues is to provide data to be operated upon by the first instruction executed by the first processor core.

Example 53 includes the subject matter of example 52, where a second instruction FIFO queue in the plurality of instruction FIFO queues is to provide a second instruction for execution by execution units of the first processor core, and a second data FIFO queue in the plurality of data FIFO queues is to provide data to be operated upon by the second instruction executed by the first processor core, where the first instruction from the first instruction FIFO queue is to be executed at least partially in parallel with the second instruction by the first processor core.

Example 54 includes the subject matter of any one of examples 51-53, further including configurable multiplexer circuitry to direct information from the first storage element to respective execution units in a plurality of execution units of the first processor core, where the configuration controller is to configure the configurable multiplexer circuitry based on the configuration definition to direct information from the plurality of FIFO queues to respective execution units of the plurality of execution units.

Example 55 includes the subject matter of any one of examples 51-54, where the plurality of FIFO queues are to provide respective information to the first processor core on a same clock cycle.

Example 56 includes the subject matter of any one of examples 51-55, where the configuration controller is to configure a second storage element in the plurality of storage elements associated with a second processor core in the plurality of processor cores to implement an L1 cache for the second processor core based on the configuration definition.

Example 57 includes the subject matter of any one of examples 50-56, further including a configurable interconnect fabric to interconnect the plurality of processor cores, where the configuration controller is to configure the configurable interconnect fabric to define data flows between the plurality of processor cores based on the configuration definition.

Example 58 includes the subject matter of example 57, where the configurable interconnect fabric is configured to feed an output of the first processor core to a FIFO queue implemented in one of the plurality of storage elements, where the output includes one of an executable instruction or data to be operated upon by an executable instruction.

Example 59 includes the subject matter of example 57, where the FIFO queue is implemented in a second storage element associated with a second processor core in the plurality of processor cores.

Example 60 includes the subject matter of example 57, where the FIFO queue is implemented in the first storage element to loopback information for use by the first processor core based on the configuration definition.

Example 61 includes the subject matter of any one of examples 50-60, where the configurations for the processor cores described in the configuration definition are to implement at least one processor of a first type and at least one processor device of a different second type through the plurality of processor cores.

Example 62 includes the subject matter of example 61, where the first type includes a general purpose processor and the second type includes one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 63 includes the subject matter of example 61, where the configuration definition includes a first configuration definition for a first operating window, where the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on a second configuration definition.

Example 64 includes the subject matter of example 63, where a first user application is to be executed on the plurality of processor cores configured based on the first configuration definition in the first operating window, and a different second user application is to be executed on the plurality of processor cores configured based on the first configuration definition in the second operating window.

Example 65 includes the subject matter of example 64, where a particular workload of the first user application is routed to the set of FIFO queues based on the first configuration definition for the first processor core.

Example 66 is a method including: receiving configuration definition data, where the configuration definition data describes a particular configuration for a configurable processor device, the configurable processor device includes: a plurality of processor cores; a configurable interconnect fabric to interconnect the plurality of processor cores; and a plurality of configurable storage elements associated with the plurality of processor cores, where storage elements in the plurality of storage elements are respectively configurable to alternatively implement one of a first-in-first-out (FIFO) queue or a level one (L1) cache for a corresponding associated processor core in the plurality of processor cores; and configuring at least the configurable interconnect fabric and the plurality of configurable storage elements to define dataflows for the plurality of processor cores based on the particular configuration.

Example 67 includes the subject matter of example 66, where the particular configuration implements a collection of processors of a plurality of different types using the plurality of processor cores.

Example 68 includes the subject matter of example 67, where the first type includes a general purpose processor and the second type includes one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 69 includes the subject matter of any one of examples 67-68, where the configuration definition includes a first configuration definition for a first operating window, where the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on a second configuration definition.

Example 70 includes the subject matter of example 69, where a first user application is to be executed on the plurality of processor cores configured based on the first configuration definition in the first operating window, and a different second user application is to be executed on the plurality of processor cores configured based on the first configuration definition in the second operating window.

Example 71 includes the subject matter of example 70, where a particular workload of the first user application is routed to the set of FIFO queues based on the first configuration definition for the first processor core.

Example 72 includes the subject matter of any one of examples 66-71, where the set of FIFO queues includes a plurality of FIFO queues.

Example 73 includes the subject matter of example 72, where the plurality of FIFO queues includes a plurality of data FIFO queues and a plurality of instruction FIFO queues, a first instruction FIFO queue in the plurality of instruction FIFO queues is to provide a first instruction for execution by execution units of the first processor core, and a first data FIFO queue in the plurality of data FIFO queues is to provide data to be operated upon by the first instruction executed by the first processor core.

Example 74 includes the subject matter of example 73, where a second instruction FIFO queue in the plurality of instruction FIFO queues is to provide a second instruction for execution by execution units of the first processor core, and a second data FIFO queue in the plurality of data FIFO queues is to provide data to be operated upon by the second instruction executed by the first processor core, where the first instruction from the first instruction FIFO queue is to be executed at least partially in parallel with the second instruction by the first processor core.

Example 75 includes the subject matter of any one of examples 72-74, further including configurable multiplexer circuitry to direct information from the first storage element to respective execution units in a plurality of execution units of the first processor core, where the configuration controller is to configure the configurable multiplexer circuitry based on the configuration definition to direct information from the plurality of FIFO queues to respective execution units of the plurality of execution units.

Example 76 includes the subject matter of any one of examples 72-75, where the plurality of FIFO queues are to provide respective information to the first processor core on a same clock cycle.

Example 77 includes the subject matter of any one of examples 72-76, where the configuration controller is to configure a second storage element in the plurality of storage elements associated with a second processor core in the plurality of processor cores to implement an L1 cache for the second processor core based on the configuration definition.

Example 78 includes the subject matter of any one of examples 66-77, further including a configurable interconnect fabric to interconnect the plurality of processor cores, where the configuration controller is to configure the configurable interconnect fabric to define data flows between the plurality of processor cores based on the configuration definition.

Example 79 includes the subject matter of example 78, where the configurable interconnect fabric is configured to feed an output of the first processor core to a FIFO queue implemented in one of the plurality of storage elements, where the output includes one of an executable instruction or data to be operated upon by an executable instruction.

Example 80 includes the subject matter of any one of examples 78-79, where the FIFO queue is implemented in a second storage element associated with a second processor core in the plurality of processor cores.

Example 81 includes the subject matter of any one of examples 78-79, where the FIFO queue is implemented in the first storage element to loopback information for use by the first processor core based on the configuration definition.

Example 82 is a system including means to perform the method of any one of examples 66-81.

Example 83 is a system including: a processor device including: a plurality of processor cores; a plurality of configurable storage elements associated with the plurality of processor cores, where storage elements in the plurality of storage elements are respectively configurable to alternatively implement one of a first-in-first-out (FIFO) queue or a level one (L1) cache for a corresponding associated processor core in the plurality of processor cores; and a configuration controller to configure a first storage element in the plurality of storage elements associated with a first processor core in the plurality of processor cores to implement a set of FIFO queues in the first storage element for the first processor core based on a configuration definition; and routing hardware to write an instruction and data to the set of FIFO queues based on the configuration definition, where the instruction is associated with a user application and the data is to be consumed during execution of the instruction by the first processor core.

Example 84 includes the subject matter of example 83, where the routing hardware is to: receive the instruction and data from a network; and determine that configuration of the first processor core is adapted to execute the instruction, where the instruction and data are written to the set of FIFO queues based on the determination that the configuration of the first processor core is adapted to execute the instruction.

Example 85 includes the subject matter of example 84, where the first processor core is configured to implement at least a portion of a particular type of processor device based on the configuration definition, and the particular type of processor device is adapted to execute the instruction.

Example 86 includes the subject matter of example 85, where the particular type of processor device includes a hardware accelerator.

Example 87 includes the subject matter of example 85, where configurations for the processor cores described in the configuration definition are to implement at least one processor of the particular type and at least one processor device of a different second type through the plurality of processor cores.

Example 88 includes the subject matter of example 87, where the particular type and the second type are selected from a group including: a general purpose processor; a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 89 includes the subject matter of any one of examples 83-88, where the routing hardware includes an infrastructure processing unit (IPU).

Example 90 includes the subject matter of any one of examples 83-89, where the routing hardware is to write the instruction and the data directly to the set of FIFO queues.

Example 91 includes the subject matter of any one of examples 83-90, where the set of FIFO queues includes a plurality of FIFO queues.

Example 92 includes the subject matter of example 91, where the plurality of FIFO queues includes a plurality of data FIFO queues and a plurality of instruction FIFO queues, a first instruction FIFO queue in the plurality of instruction FIFO queues is to provide a first instruction for execution by execution units of the first processor core, and a first data FIFO queue in the plurality of data FIFO queues is to provide data to be operated upon by the first instruction executed by the first processor core.

Example 93 includes the subject matter of example 92, where a second instruction FIFO queue in the plurality of instruction FIFO queues is to provide a second instruction for execution by execution units of the first processor core, and a second data FIFO queue in the plurality of data FIFO queues is to provide data to be operated upon by the second instruction executed by the first processor core, where the first instruction from the first instruction FIFO queue is to be executed at least partially in parallel with the second instruction by the first processor core.

Example 94 includes the subject matter of example 91, further including configurable multiplexer circuitry to direct information from the first storage element to respective execution units in a plurality of execution units of the first processor core, where the configuration controller is to configure the configurable multiplexer circuitry based on the configuration definition to direct information from the plurality of FIFO queues to respective execution units of the plurality of execution units.

Example 95 includes the subject matter of example 91, where the plurality of FIFO queues are to provide respective information to the first processor core on a same clock cycle.

Example 96 includes the subject matter of example 91, where the configuration controller is to configure a second storage element in the plurality of storage elements associated with a second processor core in the plurality of processor cores to implement an L1 cache for the second processor core based on the configuration definition.

Example 97 includes the subject matter of any one of examples 83-96, further including a configurable interconnect fabric to interconnect the plurality of processor cores, where the configuration controller is to configure the configurable interconnect fabric to define data flows between the plurality of processor cores based on the configuration definition.

Example 98 includes the subject matter of example 97, where the configurable interconnect fabric is configured to feed an output of the first processor core to a FIFO queue implemented in one of the plurality of storage elements, where the output includes one of an executable instruction or data to be operated upon by an executable instruction.

Example 99 includes the subject matter of example 97, where the FIFO queue is implemented in a second storage element associated with a second processor core in the plurality of processor cores.

Example 100 includes the subject matter of example 97, where the FIFO queue is implemented in the first storage element to loopback information for use by the first processor core based on the configuration definition.

Example 101 includes the subject matter of any one of examples 83-100, where the configurations for the processor cores described in the configuration definition are to implement at least one processor of a first type and at least one processor device of a different second type through the plurality of processor cores.

Example 102 includes the subject matter of example 101, where the first type includes a general purpose processor and the second type includes one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

Example 103 includes the subject matter of example 101, where the configuration definition includes a first configuration definition for a first operating window, where the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on a second configuration definition.

Example 104 includes the subject matter of example 103, where a first user application is to be executed on the plurality of processor cores configured based on the first configuration definition in the first operating window, and a different second user application is to be executed on the plurality of processor cores configured based on the first configuration definition in the second operating window.

Example 105 includes the subject matter of example 104, where a particular workload of the first user application is routed to the set of FIFO queues based on the first configuration definition for the first processor core.

Example 106 is an apparatus including a group of processing elements that can be reorganized or reconfigured for different processing loads.

Example 107 includes the subject matter of example 106, where execution units in the group of processing elements may have a configuration applied based on a software definition.

Example 108 includes the subject matter of example 107, where the configuration of the execution units can change over time.

Example 109 includes the subject matter of any one of examples 107-108, where the configuration of the execution units can cause the execution units to interface with FIFO queues.

Example 110 includes the subject matter of any one of examples 107-109, where a processing element in the group of processing elements can be configured to interface to another processing element in the group of processing elements.

Example 111 includes the subject matter of any one of examples 107-110, where the processing element is configured to perform two or more additions.

Example 112 includes the subject matter of any one of examples 107-110, where the processing element is configured to perform two or more multiplications.

Example 113 includes the subject matter of any one of examples 107-110, where the processing element is configured to perform at least one addition and at least one multiplication.

Example 114 includes the subject matter of any one of examples 106-110, where the processing elements include a configurable memory interface.

Example 115 includes the subject matter of example 114, where the memory interface includes configurable multiplexer circuitry.

Example 116 includes the subject matter of any one of examples 114-115, where the memory interface is configurable to change over time.

Example 117 includes the subject matter of any one of examples 114-116, where the memory interface couples FIFO queues to execution units of the processing elements.

Example 118 includes the subject matter of any one of examples 106-117, where the group of processing elements is configured to implement an AI or machine learning accelerator.

Example 119 includes the subject matter of any one of examples 106-118, where configuration of the group of processing elements defines coupling of is configured to couple neighboring processing elements to each other to pass data between the neighboring processing elements.

Example 120 includes the subject matter of example 119, where the data is passed between the neighboring processing elements at a lower latency, with less power, and/or with reduced cache misses.

Example 121 includes the subject matter of any one of examples 106-120, where the group of processing elements are configurable to configured or reconfigured on a precise time.

Example 122 includes the subject matter of example 121, where the precise time is based on a CPU time.

Example 123 includes the subject matter of example 121, where the precise time is based on a network time.

Example 124 includes the subject matter of example 121, where the precise time is based on IEEE1588.

Example 125 includes the subject matter of example 121, where the precise time is based on PCIe Precisition Time Measurement (PTM).

Example 126 includes the subject matter of any one of examples 121-125, where the precise time is sub-1us between neighboring devices.

Example 127 includes the subject matter of any one of examples 121-125, where the precise time is sub-10 ns between neighboring processing elements.

Example 128 includes the subject matter of any one of 121-127, where reconfiguration or reorganization occurs off an SOC clock.

Example 129 includes the subject matter of example 128, where the SOC clock includes an Always Running Timer (ART).

Example 130 is an apparatus including intelligent routing hardware to direct data of a software thread to a FIFO queue of a particular one of a plurality of processor cores in a configurable processor device, based on a configuration of the particular processor core.

Example 131 includes the subject matter of example 130, where the configuration causes the particular processor core to implement a particular function while the configuration is applied.

Example 132 includes the subject matter of any one of examples 130-131, where the configuration defines a configuration of a cache structure of the particular processor core.

Example 133 includes the subject matter of any one of examples 130-132, where the configuration defines a configuration of execution units of the particular processor core.

Example 134 includes the subject matter of any one of examples 130-133, where the data is directed at a precise time.

Example 135 includes the subject matter of example 134, where the precise time is based on a CPU time.

Example 136 includes the subject matter of example 134, where the precise time is based on a network time.

Example 137 includes the subject matter of example 134, where the precise time is based on IEEE1588.

Example 138 includes the subject matter of example 134, where the precise time is based on PCIe PTM.

Example 139 includes the subject matter of any one of examples 134-138, where the precise time is sub-1us between neighboring devices.

Example 140 includes the subject matter of any one of examples 134-138, where the precise time is sub-10 ns between neighboring processing elements.

Example 141 includes the subject matter of any one of examples 130-140, where the data is directed off of a SOC clock.

Example 142 includes the subject matter of example 141, where the SOC clock includes an Always Running Timer (ART).

Example 143 includes the subject matter of example 141, where the SOC clock is also used by a neighboring SOC.

Example 144 includes the subject matter of example 141, where the SOC clock is used by one or more chiplets in the SOC.

Example 145 is an apparatus including a configurable processor device, where the configurable processor device includes a group of processing elements that can be configured for different functions.

Example 146 includes the subject matter of example 145, where the configuration allows for a single dimension of processing.

Example 147 includes the subject matter of example 145, where the configuration allows for multiple dimensions of processing.

Example 148 includes the subject matter of example 145, where the configuration causes one input of one processing element to be based on the result of the previous processing element.

Example 149 includes the subject matter of any one of examples 145-148, where the different functions include a multiple accumulate function.

Example 150 includes the subject matter of any one of examples 145-149, where a processing element in the group of processing elements can be configured to configure a set of execution units of the processing element.

Example 151 includes the subject matter of example 150, where a cache to execution unit interface is changed based on a number of data inputs for the processing elements based on the configuration.

Example 152 includes the subject matter of any one of examples 150-151, where a cache to execution unit interface is changed based on a number of instruction inputs for the processing elements based on the configuration.

Example 153 includes the subject matter of any one of examples 150-152, where a cache to execution unit interface is changed based on a number of data outputs for the processing elements based on the configuration.

Example 154 includes the subject matter of any one of examples 150-153, where a result of one of the execution units can be recirculated to a previous execution unit based on the configuration.

Example 155 includes the subject matter of any one of examples 150-153, where an instruction used by one of the execution units can reused by at least one other execution unit based on the configuration.

Example 156 is a method including reconfiguring one or more processing elements in a configurable processor device to generate a future input to another processing element.

Example 157 includes the subject matter of example 156, where the reconfiguration is a path reconfiguration.

Example 158 includes the subject matter of example 156, where the reconfiguration allows recirculation.

Example 159 includes the subject matter of example 156, where the reconfiguration is based on a precise time.

Example 160 includes the subject matter of example 156, where the reconfiguration is based on an SOC or shared chiplet clock.

Example 161 includes the subject matter of example 156, where the reconfiguration is based on a function to be performed by the configurable processor device.

Example 162 includes the subject matter of example 161, where the function includes a function to accelerate an AI or machine learning workload.

Example 163 includes the subject matter of example 161, where the function includes a quantum computing function.

Example 164 includes the subject matter of example 161, where the function includes a quantum computing emulation.

Example 165 includes the subject matter of any one of examples 156-164, where the future input is the result of a mathematical operation.

Example 166 includes the subject matter of any one of examples 156-165, where the future input is an instruction.

Example 167 includes the subject matter of example 166, where the instruction is a replica of the current instruction.

Example 168 includes the subject matter of example 166, where the instruction is generated based off the current instruction.

Example 169 includes the subject matter of example 166, where the instruction contains information for additional future instructions.

Example 170 includes the subject matter of any one of examples 156-169, where the reconfiguration results in multi-dimensional processing by the configurable processor device.

Example 171 includes the subject matter of any one of examples 156-169, where the reconfiguration results in uni-dimensional processing by the configurable processor device.

Example 172 includes the subject matter of any one of examples 156-169, where the reconfiguration results in two-dimensional processing by the configurable processor device.

Example 173 includes the subject matter of any one of examples 156-169, where the reconfiguration allows multi-dimensional processing by the configurable processor device.

Example 174 is a system including means to perform the method of any one of examples 156-173.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

## Claims

1. A method comprising:
receiving configuration definition data, wherein the configuration definition data describes a particular configuration for a configurable processor device, the configurable processor device comprises:
a plurality of processor cores;
a configurable interconnect fabric to interconnect components of the processor device; and
a plurality of configurable storage elements associated with the plurality of processor cores, wherein storage elements in the plurality of storage elements are respectively configurable to alternatively implement one of a first-in-first-out (FIFO) queue or a level one (L1) cache for a corresponding associated processor core in the plurality of processor cores; and
configuring at least the configurable interconnect fabric and the plurality of configurable storage elements to define dataflows for the plurality of processor cores based on the particular configuration.

2. The method of Claim 1, wherein the particular configuration implements a collection of processors of a plurality of different types using the plurality of processor cores.

3. The method of Claim 2, wherein the first type comprises a general purpose processor and the second type comprises one of a graphics processing unit (GPU), a network processing unit, a tensor processing unit (TPU), a vector processing unit (VPU), a compressing engine unit (CEU), an encryption processing unit, a storage acceleration unit (SAU), or machine learning accelerator.

4. The method of any one of Claims 2-3, wherein the configuration definition comprises a first configuration definition for a first operating window, wherein the configuration hardware is to implement a plurality of processors of a first plurality of different types through the plurality of processor cores during the first operating window based on the first configuration definition, and the configuration hardware is to implement a plurality of processors of a different second plurality of types through the plurality of processor cores during a later second operating window based on a second configuration definition.

5. The method of Claim 4, wherein a first user application is to be executed on the plurality of processor cores configured based on the first configuration definition in the first operating window, and a different second user application is to be executed on the plurality of processor cores configured based on the first configuration definition in the second operating window.

6. The method of Claim 5, wherein a particular workload of the first user application is routed to the set of FIFO queues based on the first configuration definition for the first processor core.

7. The method of any one of Claims 1-6, wherein the set of FIFO queues comprises a plurality of FIFO queues.

8. The method of Claim 7, wherein the plurality of FIFO queues comprises a plurality of data FIFO queues and a plurality of instruction FIFO queues, a first instruction FIFO queue in the plurality of instruction FIFO queues is to provide a first instruction for execution by execution units of the first processor core, and a first data FIFO queue in the plurality of data FIFO queues is to provide data to be operated upon by the first instruction executed by the first processor core.

9. The method of Claim 8, wherein a second instruction FIFO queue in the plurality of instruction FIFO queues is to provide a second instruction for execution by execution units of the first processor core, and a second data FIFO queue in the plurality of data FIFO queues is to provide data to be operated upon by the second instruction executed by the first processor core, wherein the first instruction from the first instruction FIFO queue is to be executed at least partially in parallel with the second instruction by the first processor core.

10. The method of any one of Claims 7-9, further comprising configurable multiplexer circuitry to direct information from the first storage element to respective execution units in a plurality of execution units of the first processor core, wherein the configuration controller is to configure the configurable multiplexer circuitry based on the configuration definition to direct information from the plurality of FIFO queues to respective execution units of the plurality of execution units.

11. The method of any one of Claims 7-10, wherein the plurality of FIFO queues are to provide respective information to the first processor core on a same clock cycle.

12. The method of any one of Claims 7-11, wherein the configuration controller is to configure a second storage element in the plurality of storage elements associated with a second processor core in the plurality of processor cores to implement an L1 cache for the second processor core based on the configuration definition.

13. The method of any one of Claims 1-12, further comprising a configurable interconnect fabric to interconnect the plurality of processor cores, wherein the configuration controller is to configure the configurable interconnect fabric to define data flows between the plurality of processor cores based on the configuration definition.

14. The method of Claim 13, wherein the configurable interconnect fabric is configured to feed an output of the first processor core to a FIFO queue implemented in one of the plurality of storage elements, wherein the output comprises one of an executable instruction or data to be operated upon by an executable instruction.

15. A system comprising means to perform the method of any one of Claims 1-14.
